# FASCICULE DE BREVET EUROPEEN

(11) **EP 3 797 276 B1**
(45) Date de publication et mention de la délivrance du brevet: **31.08.2022**
(21) Numéro de dépôt: 19740609.3
(22) Date de dépôt: 21.05.2019
(51) Int. Cl.: G01M 3/20, G01M 3/22

(54) **DISPOSITIF DE DETECTION DE FUITE**
LECKDETEKTIONSVORRICHTUNG
LEAK DETECTION DEVICE

(30) Priorité: 22.05.2018 FR 1870586; 19.03.2019 WO PCT/FR2019/050623
(43) Date de publication de la demande: 31.03.2021
(73) Titulaire: Gaztransport et Technigaz, 78470 Saint-Rémy-lès-Chevreuse (FR)
(72) Inventeur: TOS, Gaël, 78470 Saint Remy les Chevreuse (FR); LARROQUE, Sébastien, 78470 Saint Remy les Chevreuse (FR); DA CUNHA, Carlos, 78470 Saint Remy les Chevreuse (FR); HASSLER, David, 78470 Saint Remy les Chevreuse (FR); PERROT, Olivier, 78470 Saint Remy les Chevreuse (FR); DE FARIA, Anthony, 78470 Saint Remy les Chevreuse (FR); FRAYSSE, Vincent, 78470 Saint Remy les Chevreuse (FR); GIMBERT, Charles, 78470 Saint Remy les Chevreuse (FR); DELETRE, Bruno, 78470 Saint Remy les Chevreuse (FR)
(74) Mandataire: Loyer & Abello
(86) Numéro de dépôt international: PCT/FR2019/051157
(87) Numéro de publication internationale: WO 2019/224475

(56) Documents cités:
- EP-A1- 3 208 591
- CH-A- 215 694
- FR-A1- 2 434 686
- FR-A1- 2 943 784
- JP-A- S5 737 240
- JP-A- 2016 223 849
- JP-A- 2017 227 530
- TW-B- 527 487
- US-A- 4 002 055
- US-B1- 6 425 565

## Description

### Domaine technique

L'invention se rapporte à une cloche de détection de fuite permettant de détecter des fuites d'une membrane d'étanchéité, en particulier d'une membrane d'étanchéité ondulée, par exemple dans une cuve étanche. Ces cuves étanches peuvent par exemple être des cuves étanches et thermiquement isolantes pour le stockage et/ou le transport d'un fluide, tel qu'un fluide cryogénique.

### Arrière-plan technologique

Le document KR1020100050128 divulgue un procédé de test de l'étanchéité d'une membrane d'une cuve étanche et thermiquement isolante de stockage de GNL. La cuve comporte une structure multicouche et présente successivement, depuis l'extérieur vers l'intérieur, un espace isolant secondaire, une membrane d'étanchéité secondaire, un espace isolant primaire et une membrane d'étanchéité primaire destinée à être en contact avec le gaz naturel liquéfié contenu dans la cuve. Le procédé vise plus particulièrement à détecter des fuites au travers des cordons de soudure qui permettent de relier de manière étanche les tôles métalliques de la membrane d'étanchéité primaire. Le procédé prévoit d'injecter un gaz traceur dans l'espace isolant primaire puis de déplacer un équipement de détection équipé d'un analyseur de gaz traceur, à l'intérieur de la cuve, le long des cordons de soudure de la membrane d'étanchéité primaire. Ainsi, si l'équipement de détection détecte la présence du gaz traceur, il peut être conclu à un défaut d'étanchéité de la membrane d'étanchéité primaire. Dans un tel procédé, l'injection du gaz traceur dans l'espace isolant primaire est critique puisque le procédé de détection ne peut garantir des résultats fiables que si le gaz traceur a diffusé de manière homogène dans l'intégralité de l'espace isolant primaire.

De plus, l'équipement de détection est composé d'une unité de succion du gaz traceur et d'un détecteur à gaz traceur. L'unité de succion est déplacée à l'aide d'un chariot tout au long du cordon de soudure, le chariot étant situé sur une paroi de fond de la cuve et l'unité de succion étant fixée au chariot de manière à se trouver sur un cordon de soudure d'une paroi adjacente à la paroi de fond. Cependant, il est difficile à l'aide de cet équipement de vérifier l'intégralité des cordons de soudure de la cuve car l'équipement est encombrant et nécessite d'être connecté au chariot sur la paroi de fond. Cet équipement est également très lent car l'équipement ne vérifie qu'une faible portion du cordon de soudure à la fois et il est nécessaire de modifier l'assemblage de l'équipement au chariot pour changer de cordon de soudure.

Le document EP3417259 décrit une cloche à vide pour détecter des fuites dans des conduites de gaz souterraines. La cloche à vide comprend une coupe d'aspiration flexible ayant un fond formant une ouverture d'aspiration. Le fond comprend une bague d'étanchéité souple entourant l'ouverture d'aspiration et formant une surface de contact adaptée pour créer un joint.

Le document JP2017227530 décrit un dispositif de pressurisation partielle pour détecter un défaut dans la soudure d'une pièce sur une surface métallique. Le dispositif de pressurisation partielle comporte une partie conteneur de pressurisation qui comporte des moyens de pressurisation, une partie de structure comprenant des moyens d'aspiration, et un moyen d'étanchéité pour maintenir une différence de pression au niveau du point de contact avec la surface à mesurer.

### Résumé de l'invention

Une idée à la base de l'invention est de proposer une cloche de détection ou un dispositif de détection de fuite permettant de tester l'étanchéité d'une membrane étanche d'une cuve qui soit fiable et facilement utilisable dans la cuve.

Une autre idée à la base de l'invention est de proposer une cloche de détection ou un dispositif de détection de fuite qui est utilisable rapidement permettant de tester l'étanchéité d'une membrane étanche d'une cuve en un minimum de temps.

Une autre idée à la base de l'invention est de proposer un procédé de test de l'étanchéité d'une membrane qui soit fiable et rapide à mettre en œuvre.

Certains aspects de l'invention se rapportent à une cloche de détection de fuite, notamment pour détecter une fuite sur une zone de test d'une membrane d'étanchéité d'une cuve étanche et thermiquement isolante, la cloche comprenant un corps principal destiné à être disposé sur une zone de test et un joint d'étanchéité lié au corps principal et configuré pour définir une chambre de détection entre le corps principal et la zone de test, le joint d'étanchéité comportant une lèvre d'étanchéité périphérique configurée pour venir en contact avec la membrane d'étanchéité et présentant un contour fermé entourant la chambre de détection.

Certains aspects de l'invention se rapportent à un dispositif de détection de fuite comportant :
- une cloche de détection de fuite précitée,
- une pompe à vide raccordée à la chambre de détection pour générer une dépression dans la chambre de détection, et
- un équipement d'analyse relié à la chambre de détection pour analyser un gaz présent dans la chambre de détection.

Certains aspects de l'invention se rapportent à un procédé d'utilisation d'un tel dispositif de détection de fuite ou d'une telle cloche de détection de fuite pour détecter une fuite sur une zone de test d'une membrane d'étanchéité d'une cuve étanche et thermiquement isolante.

Pour cela, selon un premier objet, l'invention fournit un dispositif de détection de fuite pour détecter une fuite sur une zone de test d'une membrane d'étanchéité d'une cuve étanche et thermiquement isolante selon la revendication 1, le dispositif de détection de fuite comportant :
- une cloche de détection de fuite comprenant un corps principal destiné à être disposé sur la zone de test et un joint d'étanchéité lié au corps principal et configuré pour définir une chambre de détection entre le corps principal et la zone de test, le joint d'étanchéité comportant une lèvre d'étanchéité périphérique configurée pour venir en contact avec la membrane d'étanchéité et présentant un contour fermé entourant la chambre de détection,
- une pompe à vide raccordée à la chambre de détection pour générer une dépression dans la chambre de détection, et
- un équipement d'analyse relié à la chambre de détection pour analyser un gaz présent dans la chambre de détection,
dans lequel la lèvre d'étanchéité est configurée pour présenter, au moins dans un état de service dans lequel une dépression est appliquée dans la chambre de détection, une portion de pincement qui vient se pincer entre le corps principal et la membrane d'étanchéité sur au moins une partie de la périphérie de la chambre de détection ou sur toute la périphérie de la chambre de détection.

Selon l'invention, la lèvre d'étanchéité présente une souplesse permettant la formation de ladite portion de pincement par déformation de la lèvre d'étanchéité en direction de la chambre de détection sous l'effet de la dépression dans la chambre de détection.

Selon un mode de réalisation, la chambre de détection de la cloche de détection de fuite présente une zone convexe, par exemple circulaire ou en forme de polygone, destinée à recouvrir une zone de jonction entre quatre tôles métalliques ondulées ou planes.

Selon un mode de réalisation, un cercle géométriquement inscrit dans la zone convexe présente un diamètre supérieur à 68 mm.

Selon un mode de réalisation, la cloche de détection présente une forme allongée le long d'un axe longitudinal, la chambre de détection de la cloche de détection de fuite présentant une zone allongée destinée à recouvrir un bord rectiligne d'une tôle métallique, la zone convexe étant disposée à une extrémité de la zone allongée.

Selon un mode de réalisation, la zone convexe est une première zone convexe et la chambre de détection de la cloche de détection de fuite présente une deuxième zone convexe disposée à une extrémité de la zone allongée opposée à la première zone convexe le long de l'axe longitudinal.

Selon un mode de réalisation, la cloche de détection présente une forme allongée le long d'un axe longitudinal, la zone convexe constituant une portion centrale de la chambre de détection de la cloche de détection de fuite, la chambre de détection présentant deux zones allongées s'étendant depuis la zone convexe à l'opposé l'une de l'autre le long de l'axe longitudinal.

Selon un mode de réalisation, la chambre de détection présente une forme circulaire ou polygonale convexe.

Selon un mode de réalisation, un cercle géométriquement inscrit dans la forme de la chambre de détection présente un diamètre supérieur à 68mm.

L'invention fournit aussi un procédé selon la revendication 13 d'utilisation du dispositif de détection de fuite précité sur une zone de test incluant une zone de jonction entre quatre tôles métalliques ondulées ou planes d'une membrane d'étanchéité de cuve, le procédé comportant les étapes de :
- placer la cloche de détection de fuite sur la zone de test de manière à ce que la lèvre d'étanchéité entre en contact avec la membrane d'étanchéité tout autour de la zone de test et que la zone convexe recouvre ladite zone de jonction,
- générer une dépression dans la chambre de détection au moyen de la pompe à vide
- pincer la portion de pincement de la lèvre d'étanchéité entre le corps principal et la membrane d'étanchéité sur au moins une partie de la périphérie de la chambre de détection
- conduire les gaz présents dans la chambre de détection vers l'équipement d'analyse, et
- analyser au moyen de l'équipement d'analyse les gaz venant de la chambre de détection pour produire un signal de mesure représentant une quantité d'au moins un gaz présent dans la chambre de détection.

Selon un mode de réalisation, la cloche de détection comporte en outre au moins une poignée de manutention disposée sur une surface supérieure de la cloche de détection tournée à l'opposé de la lèvre d'étanchéité.

Selon un mode de réalisation, la cloche de détection comporte deux poignées de manutention disposée sur la surface supérieure à proximité des deux extrémités longitudinales de la cloche de détection.

Selon un mode de réalisation, la ou chaque poignée de manutention est disposée sur une surface supérieure de la cloche de détection tournée à l'opposé de la lèvre d'étanchéité.

Selon un mode de réalisation, l'équipement d'analyse comporte un spectromètre de masse.

Selon d'autres modes de réalisation avantageux, une telle cloche peut présenter une ou plusieurs des caractéristiques suivantes.

Selon un mode de réalisation, la cloche de détection comprend :
- un moyen mécanique de pression porté par le corps principal et comportant au moins un élément de pression configuré pour exercer sur une portion de la lèvre d'étanchéité une pression dirigée vers la membrane lorsque le corps principal est disposé sur la zone de test.

Grâce à ces caractéristiques, la cloche de détection peut être placée rapidement sur une zone de test afin que le joint d'étanchéité puisse former une chambre de détection sur toute la zone de test. De plus, le moyen mécanique de pression permet de presser la lèvre d'étanchéité sur une ou plusieurs portions, notamment là où il se présente un risque que le joint d'étanchéité se décolle de la membrane d'étanchéité, afin de fiabiliser la détection d'une éventuelle fuite par la cloche de détection.

Avantageusement, la cloche de détection est apte à détecter un gaz traceur ayant été injecté pour les besoins du test, par exemple de l'hélium, ou un gaz de l'air ambiant. Selon une possibilité offerte par l'invention, ce gaz traceur n'est pas nécessairement injecté dans la zone dont test l'étanchéité, il peut être dans la zone par une autre manière. Par « air ambiant » on entend une phase gazeuse présentant une composition proche de l'air sec ambiant, c'est-à-dire comportant environ 78% de diazote, 21 % de dioxygène, 0.9 % d'argon ainsi que des gaz rares et des composés organiques volatiles susceptibles d'être émis par une colle utilisée dans la barrière thermiquement isolante ou provenant des matières solides isolantes.

En outre, grâce à la cloche de détection de fuite selon l'invention, on est dorénavant capable d'obtenir, sans difficulté, une pression absolue inférieure à 100 Pa dans la chambre de détection, par exemple de l'ordre de 50 à 60 Pa (0,5-0,6 mbar).

Selon un mode de réalisation, l'élément de pression est un élément déformable élastiquement qui exerce une pression sur la portion de la lèvre d'étanchéité par déformation élastique.

Ainsi, l'élasticité de l'élément de pression permet lors de sa déformation élastique d'exercer un effort de rappel sur la lèvre d'étanchéité vers la membrane d'étanchéité.

Selon un mode de réalisation, l'élément de pression est orienté perpendiculairement au contour de la lèvre d'étanchéité périphérique.

Selon un mode de réalisation, la lèvre d'étanchéité présente un état de service, lorsqu'une dépression est appliquée dans la chambre de détection, et une portion de pincement de la lèvre d'étanchéité est maintenue entre le corps principal et la membrane d'étanchéité sur au moins une partie de la périphérie de la chambre de détection, avantageusement sur toute la périphérie de ladite chambre.

Selon un mode de réalisation, la cloche de détection de fuite présente une forme allongée d'une longueur supérieure ou égale à 0,5 m, préférentiellement supérieure ou égale à 1 m, de façon plus préférentielle supérieure ou égale à 2 m. De plus, la cloche de détection de fuite peut présenter une largeur comprise entre 10 et 20 centimètre (cm), de préférence entre 14 cm et 16 cm.

Concernant le poids d'une telle cloche de détection, il pourra être compris entre 3 kilos et 25 kilos, préférentiellement entre 5 et 10 kilos, en fonction en particulier des matériaux utilisés, de sa longueur et de sa largeur.

Selon un mode de réalisation, le moyen mécanique de pression comporte une pluralité d'éléments de pression configurés pour exercer une pression sur une pluralité de portions de la lèvre d'étanchéité, des portions étant situées aux deux extrémités de la lèvre d'étanchéité dans une direction longitudinale.

Selon un mode d'exécution de l'invention, des portions de la lèvre d'étanchéité pressées par le moyen mécanique de pression sont situées aux deux extrémités de la lèvre d'étanchéité dans une direction longitudinale, soit aux deux extrémités de la cloche compte tenu que cette dernière présente une forme générale longitudinale.

Ainsi, le moyen mécanique de pression applique une pression sur différentes zones où il y a un risque de décollement du joint, à savoir les extrémités du joint d'étanchéité.

Selon un mode de réalisation, la lèvre d'étanchéité comporte au moins une échancrure présentant une forme correspondant à celle d'une ondulation de la membrane, l'échancrure étant destinée à enjamber l'ondulation.

Selon un mode de réalisation, la lèvre d'étanchéité comporte au moins deux échancrures, par exemple trois échancrures.

Grâce à ces caractéristiques, il est possible de placer la cloche de détection sur une membrane d'étanchéité comprenant des tôles ondulées, le ou les échancrures permettant à la cloche d'enjamber les ondulations.

La cloche de détection de fuites est ainsi apte, lorsqu'elle utilisée sur une zone de membrane comportant des ondes, à tester les zones de soudure présentes sur une pluralité d'ondes, par exemple au moins trois (3) ondes et jusqu'à près d'une dizaine d'ondes. Il pourra également être envisagé d'associer plusieurs cloches de détection les unes à côté des autres, ou les unes à la suite des autres, afin de former une longueur de zone de test plus grande. Selon un mode de réalisation, une seule pompe à vide peut être utilisée pour générer le vide requis dans des cloches de détection de fuites associées les unes aux autres.

Selon un mode de réalisation, une portion de la lèvre d'étanchéité pressée par le moyen mécanique de pression est située à une base de l'échancrure.

Grâce à cette caractéristique, il est possible de placer la cloche de détection sur une membrane d'étanchéité comprenant des tôles ondulées, le ou les échancrures permettant à la cloche d'enjamber les ondulations.

Ainsi, le moyen mécanique de pression applique une pression sur une zone où il y a des risques de décollement du joint d'étanchéité dus au changement de pente de l'échancrure.

Selon un mode de réalisation, le moyen mécanique de pression comporte une pluralité d'éléments de pression configurés pour exercer une pression sur une pluralité de portions de la lèvre d'étanchéité, des portions étant situées aux bases de l'échancrure ou des échancrures.

Ainsi, le moyen mécanique de pression applique une pression sur différentes zones où il y a un risque de décollement du joint, à savoir la base de ou des échancrures.

Selon un mode de réalisation, la portion de la lèvre d'étanchéité est située sur un sommet de l'échancrure.

Selon un mode d'exécution de l'invention, toutes les portions de la lèvre d'étanchéité situées aux bases de l'échancrure sont pressées par la pluralité d'éléments de pression du moyen mécanique.

Selon un mode de réalisation, au moins un des, une partie des ou les éléments de pression comportent une lame courbée dont au moins une des extrémités vient en butée sur la base d'une échancrure

Avantageusement, au moins un des, une partie des ou les éléments de pression comportent une lame courbée dont les deux extrémités viennent en butée sur la base de deux échancrures contiguës.

Grâce à cette caractéristique, le positionnement de la cloche de détection de fuite est rendu plus aisé car la lame courbée va permettre le placement adéquat en pression des échancrures de la lèvre d'étanchéité sur les deux ondes contiguës de la membrane, quel que soient les éventuelles légères variations de la distance entre ces deux ondes contiguës ou le positionnement approximatif de la cloche de détection de fuite sur la membrane à ondes par un ou plusieurs opérateurs.

Selon un mode de réalisation, un élément support s'étend sur toute la longueur du corps principal au-dessus de celui-ci et est fixé au corps principal.

Selon un mode de réalisation, les lames courbées sont réparties sur la lèvre d'étanchéité et sont fixées par des moyens de fixation à l'élément support.

Selon un mode de réalisation, les lames courbées sont déformables élastiquement de manière à, lorsqu'elles sont déformées, exercer un effort de retour élastique sur la lèvre d'étanchéité.

Selon un mode de réalisation, les moyens de fixation comportent une pluralité de pions, les pions comprenant chacun une tige montée mobile sur un corps, la tige comportant une extrémité en appui contre l'une des lames courbées, le corps étant fixé à l'élément de support, et comprenant également un ressort reliant la tige au corps, le ressort agissant entre le corps et la tige afin de positionner l'extrémité de la tige en appui contre la lame courbée et le ressort étant configuré pour exercer une force de rappel sur la lame courbée de sorte que la lame courbée vienne plaquer la lèvre d'étanchéité contre le pied d'une ondulation.

Selon un mode de réalisation, le moyen mécanique de pression comprend une pluralité d'éléments de pression d'extrémité, les éléments de pression d'extrémité étant situés aux deux extrémités de la lèvre d'étanchéité dans une direction longitudinale, soit aux deux extrémités de la cloche étant donné que cette dernière présente une forme longitudinale.

Selon un mode de réalisation, au moins un ou les éléments de pression d'extrémité comprennent un pion d'extrémité, le pion d'extrémité comprenant une tige montée mobile sur un corps, un élément d'appui allongé étant fixé à une extrémité de la tige, l'élément d'appui allongé venant en appui contre la lèvre d'étanchéité, et le corps étant fixé à l'élément de support, le pion d'extrémité comprenant également un ressort reliant la tige au corps, le ressort agissant entre le corps et la tige afin de positionner l'élément d'appui allongé contre la lèvre d'étanchéité, le ressort étant configuré pour exercer une force de rappel sur l'élément d'appui allongé de sorte que l'élément d'appui allongé vienne plaquer la lèvre d'étanchéité contre la zone à tester.

Selon un mode de réalisation, la deuxième extrémité est équipée d'un élément d'appui allongé, l'élément d'appui allongé étant configuré pour transmettre l'effort de retour élastique sur une zone de la lèvre d'étanchéité correspondant à une longueur de l'élément d'appui allongé.

Selon un mode de réalisation, la deuxième extrémité d'un premier pion d'extrémité et la deuxième extrémité d'un deuxième pion d'extrémité adjacent au premier pion d'extrémité sont fixées l'une à l'autre à l'aide d'un élément d'appui allongé.

Selon un mode de réalisation, au moins un ou les éléments de pression d'extrémité comprennent une pluralité d'éléments de réglage formant une ligne d'éléments, l'élément de réglage comprenant une tige s'étendant en direction de la lèvre d'étanchéité et une extrémité réglable dans une direction longitudinale de la tige de sorte à venir en contact avec la lèvre d'étanchéité après réglage.

Selon un mode de réalisation, l'élément de pression comporte une lame courbée comprenant à une de ses extrémités en contact avec la lèvre d'étanchéité un manchon cylindrique.

Ainsi, le manchon cylindrique permet d'appliquer uniformément la pression du moyen mécanique de pression sur une partie de la lèvre d'étanchéité.

Selon un mode de réalisation, le joint d'étanchéité comprend une enveloppe qui recouvre au moins partiellement le corps principal et qui est fixée au corps principal, la lèvre d'étanchéité périphérique étant liée à l'enveloppe de manière à la prolonger et étant recourbée à l'opposé du corps principal.

Selon un mode de réalisation, le manchon cylindrique comprend une direction de longueur, la direction de longueur du manchon cylindrique étant sensiblement orthogonale à l'enveloppe de manière à ce que le manchon cylindrique s'étende de l'enveloppe à une extrémité de la lèvre d'étanchéité.

Selon un mode de réalisation, la lèvre d'étanchéité comprend une partie recourbée sensiblement orthogonale à l'enveloppe, la partie recourbée ayant une dimension en section transversale supérieure ou égale à 1 cm, de préférence supérieure ou égale à 1,5 cm, de façon plus préférentielle supérieure ou égale à 2 cm.

Selon un mode de réalisation, le joint d'étanchéité est réalisé dans un matériau élastomère présentant une dureté comprise entre 20 et 50 shore A.

Grâce à ces caractéristiques, le joint d'étanchéité est composé d'un matériau suffisamment souple pour être déformé par le moyen mécanique de pression.

Selon un mode de réalisation, le matériau élastomère du joint d'étanchéité est choisi parmi le polyuréthane élastomère et le caoutchouc éthylène-propylène-diène monomère (EPDM). Le matériau élastomère du joint d'étanchéité peut également être en silicone, en nitrile ou en Viton ^{®}.

Selon un mode de réalisation, le corps principal comporte un noyau rigide, et le joint d'étanchéité comporte une enveloppe appliquée hermétiquement contre une paroi périphérique du noyau rigide.

Selon un mode de réalisation, le noyau rigide comporte un évidement sur une surface inférieure destinée à être tournée vers la zone de test.

Selon un mode de réalisation, le noyau rigide comporte un canal reliant l'évidement à une surface supérieure du noyau rigide pour connecter une pompe à vide.

Selon un mode de réalisation, la cloche de détection de fuite est orientée sur la zone de test de manière qu'une longueur de la cloche de détection de fuite soit superposée avec la zone de test.

Selon un mode de réalisation, la zone de test est une partie d'un cordon de soudure de la membrane d'étanchéité.

Ainsi, la cloche de détection de fuite permet de vérifier s'il n'y a pas de défaut sur le cordon de soudure qui pourrait engendrer une fuite dans la membrane d'étanchéité.

Selon un mode de réalisation, la zone de test se situe sur une membrane d'étanchéité ondulée.

Selon un mode de réalisation, la lèvre d'étanchéité périphérique est conformée pour s'adapter à la géométrie de ladite au moins une ondulation.

Selon un mode de réalisation, la portion du cordon de soudure est traversée par au moins deux ondulations, par exemple trois ondulations, parallèles de la membrane et la lèvre d'étanchéité périphérique est conformée pour s'adapter à la géométrie desdites ondulations.

Selon un mode de réalisation, la lèvre d'étanchéité périphérique comporte au moins deux échancrures présentant une forme correspondant à celle d'une ondulation de la membrane faisant saillie vers l'intérieur de la cuve, lesdites échancrures étant destinées à enjamber ladite ondulation.

Selon un mode de réalisation, au moins une ondulation de la membrane fait saillie vers l'intérieur de la cuve, la cloche de détection étant disposée contre la membrane de manière à ce que les échancrures enjambent l'ondulation.

Selon un mode de réalisation, la lèvre d'étanchéité périphérique comporte au moins deux zones en saillie présentant une forme correspondant à celle d'une ondulation de la membrane faisant saillie vers l'extérieur de la cuve.

Selon un mode de réalisation, la cloche de détection est disposée contre la membrane de manière à ce que les zones en saillie s'insèrent dans l'ondulation.

Selon un mode de réalisation, l'on met en dépression la chambre de détection jusqu'à une valeur de pression absolue comprise entre 10 et 1000 Pa, de préférence inférieure à 100 Pa absolu.

Selon un mode de réalisation, l'on analyse la phase gazeuse pendant une durée supérieure ou égale à 5 secondes.

Selon un mode de réalisation, l'on compare la variable représentative d'une quantité de gaz dans ladite phase gazeuse à un seuil et l'on détermine que l'étanchéité de la portion du cordon de soudure est défectueuse lorsque la variable représentative est supérieure audit seuil.

Selon des modes de réalisation, l'équipement d'analyse est configuré pour détecter un gaz traceur ou pour détecter un composant de l'air ambiant.

### Brève description des dessins

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] est une vue schématique d'un dispositif de détection de fuite selon un premier mode de réalisation.
[Fig.2] est une vue en coupe transversale selon le plan II-II de la cloche de détection du dispositif de détection de fuite de la figure 1.
[Fig.3] est une vue en perspective d'un joint d'étanchéité selon un premier mode de réalisation.
[Fig.4] est une vue schématique d'une variante d'un dispositif de détection de fuite dans laquelle la cloche de détection est équipée d'un système de serrage.
[Fig.5] est une vue en perspective d'un joint d'étanchéité selon un deuxième mode de réalisation.
[Fig.6] illustre schématiquement le positionnement de la cloche de détection en regard d'une portion d'un cordon de soudure assurant l'étanchéité entre deux tôles métalliques ondulées adjacentes d'une membrane.
[Fig.7] est une vue schématique d'un dispositif de détection de fuite selon un deuxième mode de réalisation.
[Fig.8] est une vue en perspective d'une cloche de détection de fuite selon un troisième mode de réalisation.
[Fig.9] est une vue schématique en coupe transversale de la cloche de détection de la figure 8, avant mise en dépression de la chambre de détection.
[Fig.10] est une vue schématique en coupe transversale de la cloche de détection de la figure 8, après mise en dépression de la chambre de détection.
[Fig.11] est une illustration schématique d'une structure multicouche d'une paroi d'une cuve à membranes.
[Fig.12] est une vue schématique partielle d'une cuve étanche et thermiquement isolante illustrant des dispositifs d'injection de gaz traceur positionnés au travers d'une membrane de la paroi de fond de la cuve.
[Fig.13] est une vue en perspective d'une cloche de détection de fuite selon un quatrième mode de réalisation.
[Fig.14] est une vue agrandie du détail XIV de la figure 13 illustrant un élément de pression de la cloche de détection de fuite.
[Fig.15] représente une vue agrandie du détail XV de la figure 13 illustrant une première extrémité de la cloche de détection de fuite.
[Fig.16] représente une vue agrandie du détail XVI de la figure 13 illustrant une deuxième extrémité de la cloche de détection de fuite.
[Fig.17] représente une vue agrandie du détail XVI de la figure 13 selon un autre angle de vue.
[FIG. 18] est une vue de dessus d'une membrane d'étanchéité illustrant schématiquement une cloche de détection positionnée pour tester une jonction entre quatre tôles rectangulaires.
[FIG. 19] est une vue analogue à la figure 18 illustrant une autre géométrie de la cloche de détection positionnée pour tester une jonction entre quatre tôles rectangulaires.
[FIG. 20] est une vue analogue à la figure 18 illustrant encore une autre géométrie de la cloche de détection positionnée pour tester une jonction entre quatre tôles rectangulaires.
[FIG. 21] est une vue de dessus de la cloche de détection de fuite de la figure 13, illustrant également un dispositif de visée optique.
[FIG. 22] est une vue schématique fonctionnelle d'un dispositif de détection de fuite employant la cloche de détection de fuite de la figure 13.
[FIG. 23] est un diagramme illustrant un procédé d'activation pouvant être mis en oeuvre dans le dispositif de détection de fuite de la figure 22.
[FIG. 24] est un diagramme illustrant un procédé de désactivation pouvant être mis en œuvre dans le dispositif de détection de fuite de la figure 22.
[FIG. 25] est une vue schématique fonctionnelle d'une vanne à trois voies pouvant être employée dans le dispositif de détection de fuite de la figure 22.

### Description des modes de réalisation

On va décrire ci-dessous un dispositif de détection de fuite qui peut être utilisé pour détecter des fuites dans différents assemblages étanches, par exemple un assemblage soudé. Dans les exemples ci-dessous, l'assemblage soudé est une membrane d'étanchéité pour une cuve de fluide.

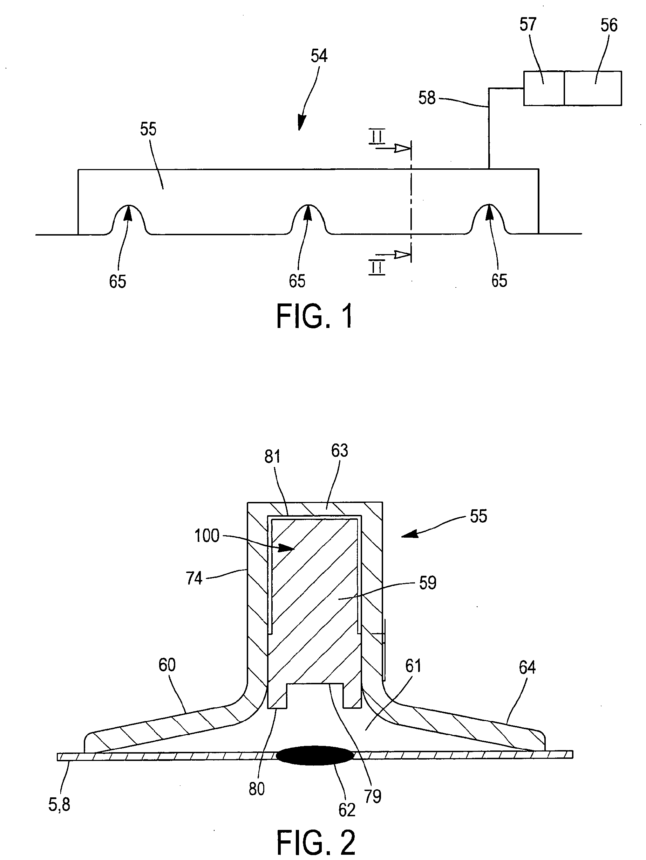

Pendant l'étape du test d'étanchéité permettant de vérifier l'étanchéité des cordons de soudure d'une membrane 5, 8, on utilise un dispositif de détection de fuite 54, tel que représenté sur la figure 1.

Le dispositif de détection de fuite 54 comporte une cloche de détection 55 qui est destinée à être disposée contre la face interne de la membrane 5, 8 en regard d'une portion du cordon de soudure à tester.

La cloche de détection 55 présente une forme allongée et présente une longueur comprise entre 0,5 et 4 m, par exemple de l'ordre de 1 m. La longueur de la cloche de détection 55 est avantageusement la plus grande possible de manière à vérifier l'étanchéité d'une zone plus importante au cours d'un seul et unique test. Néanmoins, le choix de cette longueur de la cloche pourra être adaptée en fonction d'une part des dimensions de la membrane 5, 8 à tester et d'autre part en vue de sa manœuvrabilité par un minimum d'opérateur(s), de préférence par un seul opérateur. Une forme allongée est particulièrement adaptée à tester un assemblage de tôles métalliques rectangulaires, dans lequel les cordons de soudure suivent essentiellement les bords rectilignes des tôles.

Comme représenté sur la figure 2, la cloche de détection 55 comporte un corps principal 100 rigide et un joint d'étanchéité 60 souple qui sont fixés l'un à l'autre et qui sont agencés pour définir avec la membrane 5,8 à tester une chambre de détection 61 étanche, disposée en regard de la portion du cordon de soudure 62 à tester.

En revenant à la figure 1, on observe que le dispositif de détection de fuite 54 comporte également un équipement d'analyse 56 qui est raccordé à la chambre de détection 61 et permet de détecter un gaz prédéfini, par exemple un gaz traceur ou un gaz de l'air ambiant présent de l'autre côté de l'assemblage soudé à tester. Dès lors que l'équipement d'analyse 56 détecte le gaz prédéfini dans une quantité supérieure à un seuil, il peut être conclu à un défaut d'étanchéité de la portion du cordon de soudure 62 testée. Selon un mode de réalisation, l'équipement d'analyse 56 est un spectromètre de masse.

Le dispositif de détection de fuite 54 comporte également une pompe à vide 57 qui est associée audit équipement d'analyse 56. La pompe à vide 57 est raccordée, d'une part, à la chambre de détection de la cloche de détection 55 de manière à permettre une mise en dépression de la chambre de détection et, d'autre part, à l'équipement d'analyse 56 de manière à conduire le gaz contenu dans la chambre de détection 61 vers l'équipement d'analyse 56.

La pompe à vide 57 est reliée à la cloche de détection 55 via un tuyau 58 qui est de préférence flexible. Le tuyau 58 est raccordé à un canal qui est ménagé dans le corps principal 100 et débouche dans la chambre de détection 61.

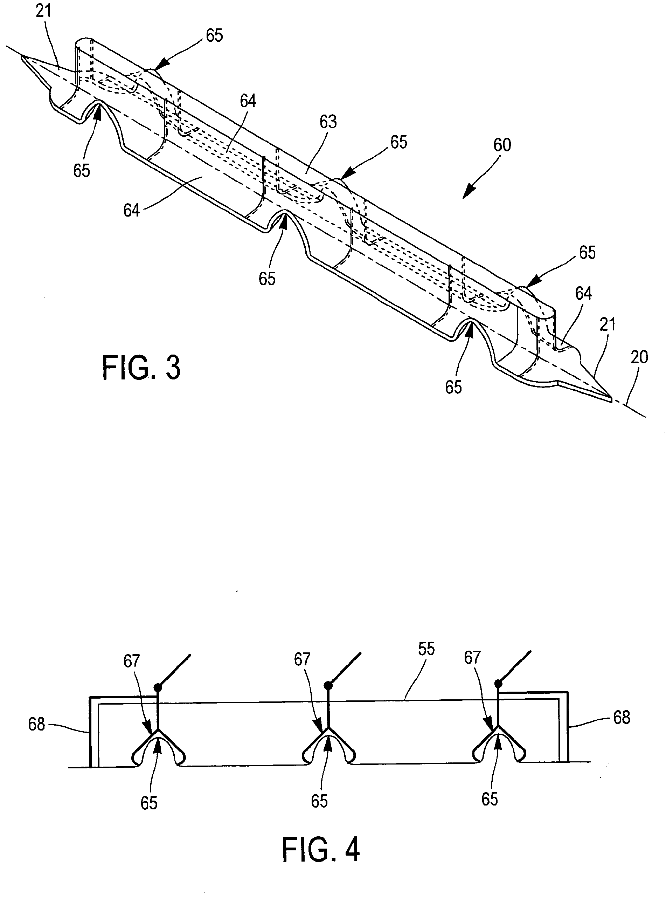

Comme représenté sur les figures 2 et 3, le corps principal 100 comporte un noyau rigide 59 et le joint d'étanchéité 60 comporte une enveloppe 63 épousant la forme du noyau rigide 59 et une lèvre d'étanchéité périphérique 64 qui prolonge l'enveloppe 63 vers le bas. L'enveloppe présente un fond 63 qui recouvre la surface supérieure du noyau rigide 59 et une paroi périphérique 74 qui épouse la périphérie du noyau rigide 59. Le fond 63 présente au moins un trou, non représenté, auquel est raccordé de manière étanche le tuyau 58 relié à la pompe à vide 57. Le noyau rigide 59 comporte sur sa surface inférieure 80 un évidement 79 sur toute la longueur du noyau rigide 59. L'évidement 79 permet lors d'une mise en dépression de la chambre de détection 61 d'assurer, malgré un abaissement du noyau rigide 59 vers la membrane 5, 8 dû à une déformation de la lèvre d'étanchéité 64, que la zone de test 62 se trouve toujours en contact fluidique avec la chambre de détection 61. De plus, le noyau rigide 59 comporte également un canal 82, non représenté sur la figure 2 car présent seulement dans un plan passant au niveau du tuyau 58, permettant de relier l'évidement 79 à une surface supérieure 81 du noyau rigide 59. Le canal 82 permet de mettre en communication la chambre de détection 61 avec la pompe à vide 57 et l'équipement d'analyse 56 via le tuyau 58.

La lèvre d'étanchéité périphérique 64 est recourbée vers l'extérieur de la cloche de détection 55 et est ainsi configurée pour se fléchir et se plaquer contre la membrane 5, 8 lorsque la chambre étanche 61 est mise en dépression. En d'autres termes, la lèvre d'étanchéité périphérique 64 présente une section présentant une forme générale de L.

La portion recourbée vers l'extérieur de la lèvre d'étanchéité périphérique 64 présente une largeur de l'ordre de 15 à 40 mm. La lèvre d'étanchéité périphérique 64 est conformée pour s'adapter à la géométrie de la membrane 5, 8 le long du cordon de soudure à tester. Aussi, sur la figure 3, la lèvre d'étanchéité périphérique 64 comporte des échancrures 65 présentant une forme correspondant à celle des ondulations de la membrane 5, 8 que la cloche de détection 55 est destinée à enjamber lorsqu'elle est en position contre la portion du cordon de soudure 62 à tester.

Le joint d'étanchéité 60 est avantageusement réalisé dans un matériau élastomère présentant une dureté comprise entre 20 et 50 Shore A. Le joint d'étanchéité est par exemple réalisé en polyuréthane élastomère, en caoutchouc EPDM, en silicone, en nitrile ou en Viton ^{®}.

La figure 3 illustre également l'axe longitudinal médian 20 de la chambre de détection 61 entourée par la lèvre d'étanchéité périphérique 64. En service, il est souhaitable de bien centrer la chambre de détection 61 sur le cordon de soudure à vérifier, en particulier du fait que la chambre de détection 61 peut être relativement étroite. Pour cela, la cloche de détection 55 peut comporter un dispositif de visée qui est réalisé, sur la figure 3, sous la forme de deux pointes indicatrices 21 qui sont placées aux deux extrémités longitudinales de la cloche de détection et orientées dans l'alignement de l'axe longitudinal médian 20. En variante, une seule des deux pointes indicatrices 21 pourrait être prévue. Les pointes indicatrices 21 sont ici réalisées d'un seul tenant avec la lèvre d'étanchéité périphérique 64, ce qui assure que les pointes indicatrices 21 sont à proximité immédiate de la membrane 5, 8 et limite donc les risques d'erreur de visée par parallaxe. Les pointes indicatrices 21 peuvent cependant être réalisées d'autres manières, par exemple sous la forme de pièces rapportées. Les pointes indicatrices 21 peuvent être fixées à d'autres parties de la cloche de détection 55.

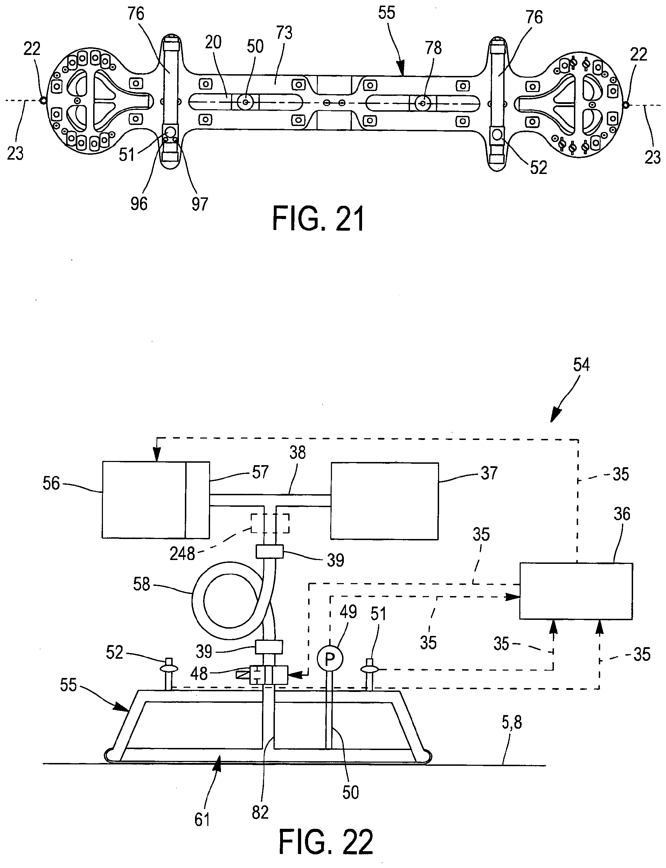

La figure 21 illustre un dispositif de visée optique constituée de deux diodes laser 22 attachées aux deux extrémités longitudinales de la cloche de détection 55 et émettant des faisceaux lumineux 23 également orientés dans l'alignement de l'axe longitudinal médian 20. En variante, une seule des deux diodes laser 22 pourrait être prévue. La diode laser 22 peut être placée sur la lèvre d'étanchéité périphérique 64 ou au-dessus de la lèvre d'étanchéité périphérique 64, par exemple sur un élément support 73 qui sera décrit plus bas. De préférence dans ce cas, le faisceau lumineux 23 est incliné légèrement vers le bas pour frapper la membrane 5, 8 et ainsi limiter les risques d'erreur de visée par parallaxe.

Dans un mode de réalisation illustré schématiquement sur la figure 4, la cloche de détection 55 est en outre équipée d'un moyen mécanique de pression 66, qui est dans ce mode de réalisation un système de serrage 66, apte à plaquer la lèvre d'étanchéité périphérique 64 contre la membrane 8 à tester de manière à garantir l'étanchéité de la chambre de détection 61. Le système de serrage 66 comporte ici une pince 67 au niveau de chacune des échancrures 65 de la lèvre d'étanchéité périphérique 64. Chaque pince 67 comporte deux branches respectivement disposées de part et d'autre de l'échancrure 65 et configurées pour venir appliquer un effort de serrage de la lèvre d'étanchéité périphérique 64 contre la membrane 8. De manière avantageuse, les branches sont configurées pour serrer la lèvre d'étanchéité périphérique 64 contre la membrane d'étanchéité, à proximité de la base de l'ondulation.

Par ailleurs, dans le mode de réalisation représenté, le système de serrage 66 comporte en outre, au niveau de chacune des extrémités longitudinales de la cloche de détection 55, un doigt 68, mobile, qui est configuré pour venir plaquer l'une des extrémités longitudinales de la lèvre d'étanchéité périphérique 64 contre la membrane 8.

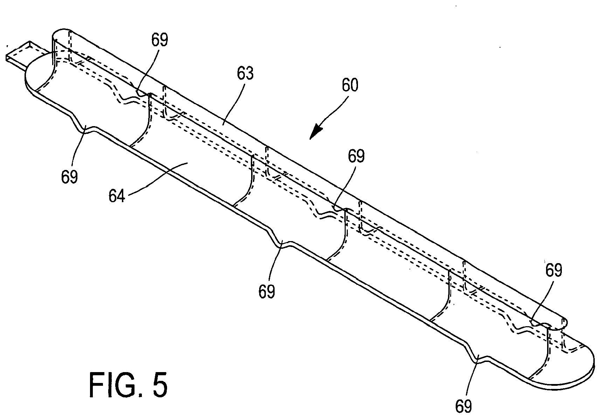

La figure 5 illustre un joint d'étanchéité 60 selon un mode de réalisation alternatif. Ce joint d'étanchéité 60 est conformé pour s'adapter à une membrane 5 dans laquelle les ondulations font saillie vers l'extérieur de la cuve. Une telle membrane est par exemple une membrane secondaire 5 selon la technologie Mark V. Aussi, la lèvre d'étanchéité périphérique 64 comporte des zones en saillie 69 destinées à venir s'insérer à l'intérieur des ondulations de la membrane 5.

Une procédure pour détecter un défaut d'étanchéité d'un cordon de soudure est la suivante.

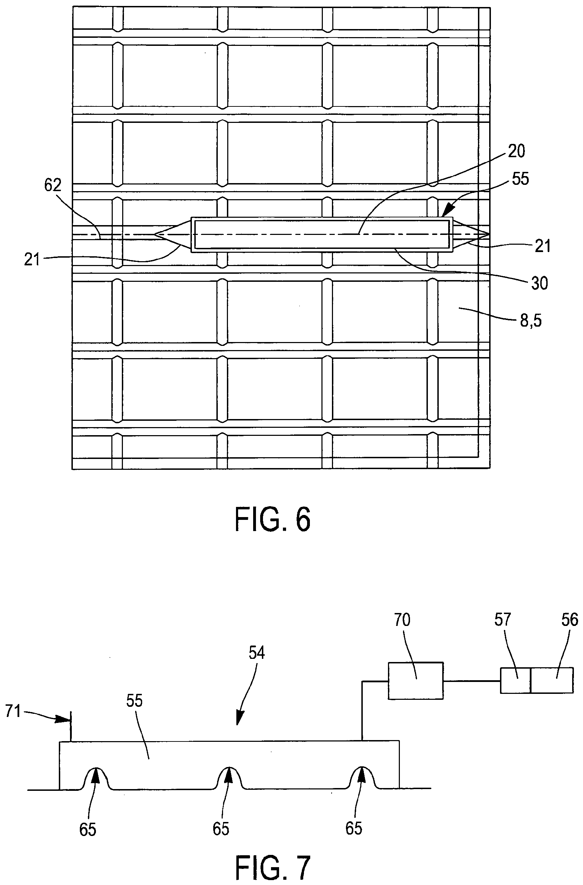

Dans un premier temps l'on dispose la cloche de détection 55 en regard de la portion du cordon de soudure 62 à tester, qui longe un bord rectiligne d'une tôle rectangulaire, tel que représenté sur la figure 6.

Il convient de s'assurer que la cloche de détection 55 est convenablement centrée par rapport au cordon de soudure 62 de sorte que les deux parties latérales de la portion recourbée de la lèvre d'étanchéité périphérique 64 soient disposées de part et d'autre du cordon de soudure 62.

Pour cela, la figure 6 illustre également le dispositif de visée, réalisé ici sous la forme des deux pointes indicatrices 21, qui sont placées précisément en superposition du cordon de soudure 62 par l'opérateur pour ainsi aligner l'axe longitudinal médian 20 de la chambre de détection avec le cordon de soudure 62. Dans le cas du dispositif de visée optique de la figure 21, ce sont les faisceaux lumineux 23 qui seront placées précisément en superposition du cordon de soudure 62.

La figure 6 illustre aussi schématiquement le contour 30 de la chambre de détection 61, à savoir la ligne de contact étanche entre la lèvre d'étanchéité périphérique 64 et la membrane 5, 8.

La pompe à vide 57 est alors mise en fonctionnement afin de mettre la chambre de détection 61 en dépression et favoriser la migration du gaz au travers des zones défectueuses du cordon de soudure 62.

Dès que la pression à l'intérieur de la chambre de détection 61 passe en dessous d'un seuil de pression Ps, un flux de gaz est conduit de la chambre de détection 61 vers l'équipement d'analyse 56 et un taux de fuite ϕ du gaz prédéfini, par exemple gaz traceur, est mesuré pendant une durée minimale Tm. Le taux de fuite ϕ est alors comparé à un seuil ϕs.

Si le taux de fuite ϕ est inférieur au seuil ϕs, alors il est conclu que la portion testée du cordon de soudure 62 ne présente pas de défaut d'étanchéité. Dans ce cas, la cloche de détection 55 est alors détachée de la membrane 5, 8 par libération de la dépression dans la chambre de détection 61, par exemple par ouverture d'une entrée de gaz 71 représentée sur la figure 7. Puis la cloche de détection 55 est disposée en regard d'une portion adjacente du cordon de soudure 62 en assurant un recouvrement entre les deux portions successivement testées de manière à garantir que l'étanchéité du cordon de soudure 62 ait été testée sur toute la longueur dudit cordon de soudure 62.

Au contraire, si le taux de fuite ϕ est supérieur ou égal au seuil ϕs, alors il est conclu que la portion testée du cordon de soudure 62 présente un défaut d'étanchéité. Des mesures de soudure correctives sont alors mise en œuvre afin de corriger le défaut.

A titre d'exemple, pour une concentration en hélium dans l'espace thermiquement isolant de l'ordre de 20 %, le seuil de pression en dessous duquel le taux de fuite est mesuré est compris entre 10 et 1000 Pa absolu, de préférence inférieure à 100 Pa absolu. A titre d'exemple, la durée minimale de mesure du taux de fuite est de 5 secondes et le seuil ϕs est de l'ordre de 1,0.10⁻⁶ Pa.m³.s⁻¹.

La figure 7 représente un dispositif de détection de fuite 54 selon un autre mode de réalisation. Ce mode de réalisation diffère du mode de réalisation décrit précédemment en ce qu'il comporte en outre une chambre d'homogénéisation 70 qui est disposée entre la chambre de détection 61 et l'équipement d'analyse 56 et en ce que la cloche de détection 55 comporte une entrée de gaz 71.

L'entrée de gaz 71 est équipée d'un robinet permettant d'établir ou d'interrompre un écoulement d'air ambiant vers la chambre de détection 61. La chambre d'homogénéisation 70 est raccordée à une extrémité de la chambre de détection 61 tandis que l'entrée de gaz 71 est raccordée à l'extrémité opposée de la chambre de détection 61.

Le mode de fonctionnement du dispositif de détection de fuite 54 est le suivant.

Lorsque la cloche de détection 55 est disposée en regard de la portion du cordon de soudure 62 à tester, le robinet de l'entrée de gaz 71 est fermé et la pompe à vide 57 est mise en fonctionnement afin de mettre la chambre de détection 61 en dépression. Dès que la pression à l'intérieur de la chambre de détection 61 passe en dessous d'un seuil de pression Ps, le robinet de l'entrée de gaz 71 est ouvert et l'ensemble du gaz préalablement contenu dans la chambre étanche est transféré vers la chambre d'homogénéisation 70. La chambre d'homogénéisation 70 présente un volume supérieur à celui de de la chambre de détection 61 et comporte par exemple un système de piston permettant d'aspirer précisément l'intégralité du gaz contenu dans la chambre de détection 61.

Le gaz contenu dans la chambre d'homogénéisation 70 est ensuite transféré en direction de l'équipement d'analyse 56 afin de déterminer un taux de fuite ϕ en gaz.

Un tel mode de réalisation est avantageux en ce qu'il permet de diminuer le temps de diffusion du gaz à l'intérieur de la cloche de détection 55 et permet ainsi de diminuer la durée minimale de mesure. Ceci est notamment avantageux lorsque le temps pour que le gaz migre d'une extrémité à une autre de la cloche de détection 55 est susceptible d'être long en raison d'une longueur importante de la cloche de détection 55 et/ou lorsque la dépression régnant à l'intérieur de la chambre de détection 61 est insuffisante.

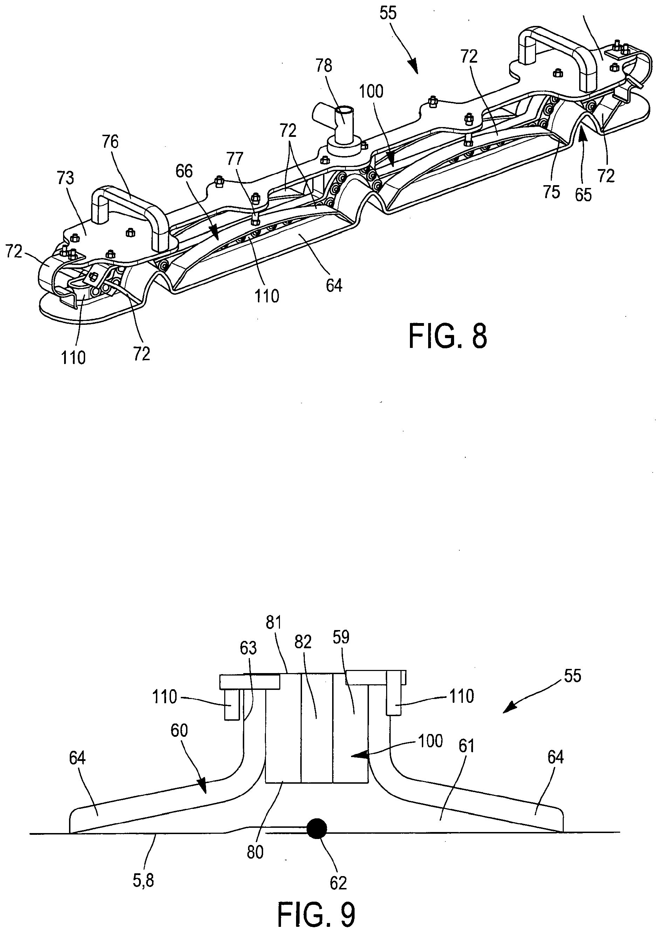

La figure 8 représente une cloche de détection 55 selon un troisième mode de réalisation. La cloche de détection 55 de la figure 8 est conçue similairement à la cloche de détection 55 de la figure 4 mais diffère notamment concernant le moyen mécanique de pression 66. En effet, la cloche de détection 55 comprend un corps principal 100 s'étendant dans une direction longitudinale, un joint d'étanchéité 60 souple fixé sur le corps principal 100 et un moyen mécanique de pression 66 porté par le corps principal et configuré pour exercer une pression dirigée vers la membrane 5, 8 sur le joint d'étanchéité 60. Le corps principal 100 comporte un noyau rigide 59. Le noyau rigide 59 comporte un canal 82 permettant de relier une surface inférieure 80 à une surface supérieure 81 du noyau rigide 59. Le canal 82 permet de mettre en communication la chambre de détection 61 à la sortie de gaz 78.

Le joint d'étanchéité 60 comporte une enveloppe 63 fixée au noyau rigide 59 par des moyens de fixation 110, par exemple consistant en un cerclage entourant toute la circonférence du noyau rigide 59 et du joint d'étanchéité 60 et fixant ces deux éléments 59/60 l'un à l'autre par l'intermédiaire d'un élément mécanique de fixation tels que des vis. Le joint d'étanchéité 60 comporte également une lèvre d'étanchéité périphérique 64 liée à l'enveloppe 63 et présentant un contour fermé permettant d'entourer la partie du cordon de soudure 62 à tester. La lèvre périphérique 64 est de plus recourbée en direction opposée au corps principal 100 de manière à avoir une partie de la lèvre périphérique 64 sensiblement parallèle à la membrane 5, 8. La lèvre d'étanchéité périphérique 64 présente également une pluralité d'échancrures 65 espacées sur sa circonférence, les échancrures 65 ayant la forme des ondulations de la membrane 5, 8 à tester. Ainsi, lors du placement de la cloche de détection 55 sur la membrane 5, 8, les échancrures 55 permettent à la cloche de détection 55 de s'adapter à la forme ondulée de la membrane 5, 8. Le corps principal 100 et l'élément porteur 73 sont notamment traversés par une sortie de gaz 78 permettant lors de la mise en dépression de la chambre de détection 61 d'évacuer le gaz.

Un élément support 73 s'étend sur toute la longueur du corps principal 100 au-dessus de celui-ci et est fixé au corps principal 100. Des poignées de manutention 76 sont fixées aux deux extrémités longitudinales de l'élément support 73 de manière à permettre la manipulation de la cloche de détection 55 par un opérateur et éventuellement d'actionner le moyen mécanique de pression par un effort de l'opérateur.

Le moyen mécanique de pression 66 est composé d'une pluralité d'éléments de pression 72 qui sont sous la forme de lames courbées 72 réparties sur la lèvre d'étanchéité 64 et qui sont fixées par des moyens de fixation 77 à l'élément support 73. Les lames courbées 72 sont déformables élastiquement de manière à, lorsqu'elles sont déformées, exercer un effort de retour élastique sur la lèvre d'étanchéité 64 afin de la plaquer sur la membrane 5, 8. Pour fiabiliser l'étanchéité de la chambre de détection 61, il semble judicieux de plaquer la lèvre d'étanchéité 64 dans les zones où le risque de décollement est plus important. C'est pourquoi des lames courbées 72 sont situées notamment aux bases des échancrures 64 de la lèvre d'étanchéité 64 et aux extrémités longitudinales de la cloche de détection 55 sur la lèvre d'étanchéité 64.

Une pluralité de lames courbées 72 sont fixées à l'une de leur extrémité à l'élément support 73 tandis que l'autre extrémité est placée sur la lèvre d'étanchéité 64. Ces lames 72 sont notamment placées sur les extrémités de la cloche de détection 55. D'autres lames courbées 72 sont quant à elle fixées en leur milieu à l'élément support 73 alors que leurs deux extrémités sont placées sur la lèvre d'étanchéité 64 de manière à appliquer une pression sur deux zones différentes, ces lames 72 étant notamment placées entre deux échancrures 65.

Les lames courbées 72 présentent à chacune de leur extrémité en contact avec la lèvre d'étanchéité 64 un manchon cylindrique 75. Le manchon cylindrique 75 permet notamment un appui homogène sur la lèvre d'étanchéité 64 en évitant tout poinçonnant qui pourrait dégrader l'intégrité de la lèvre d'étanchéité 64. Le manchon cylindrique 75 s'étend dans une direction orthogonale à la direction longitudinale du corps principal 100. La longueur d'un manchon cylindrique 75 est de plus sensiblement égale à la dimension de la partie de la lèvre d'étanchéité 64 faisant saillie du corps principal 100, dans la direction où s'étend le manchon cylindrique 75. Ainsi le manchon cylindrique 75 permet au moyen mécanique de pression 66 d'exercer une pression de manière efficace sur la lèvre d'étanchéité.

Lors du placement de la cloche de détection de fuite 55 sur la zone à tester, il faut s'assurer que le moyen mécanique de pression 66 plaque bien de manière étanche le joint d'étanchéité 60 pour pouvoir tester l'étanchéité de la soudure convenablement. Une problématique est donc de s'assurer que le moyen mécanique de pression 66 joue bien son rôle tout autour de la lèvre d'étanchéité périphérique 64. Or, la zone à tester et notamment aux extrémités de la cloche de détection 55 peut être une zone de jonction entre plusieurs tôles métalliques ondulées, par exemple quatre tôles métalliques ondulées, de sorte que la zone n'est pas entièrement plane mais comporte des nivelages rendant difficile de plaquer le joint d'étanchéité 60.

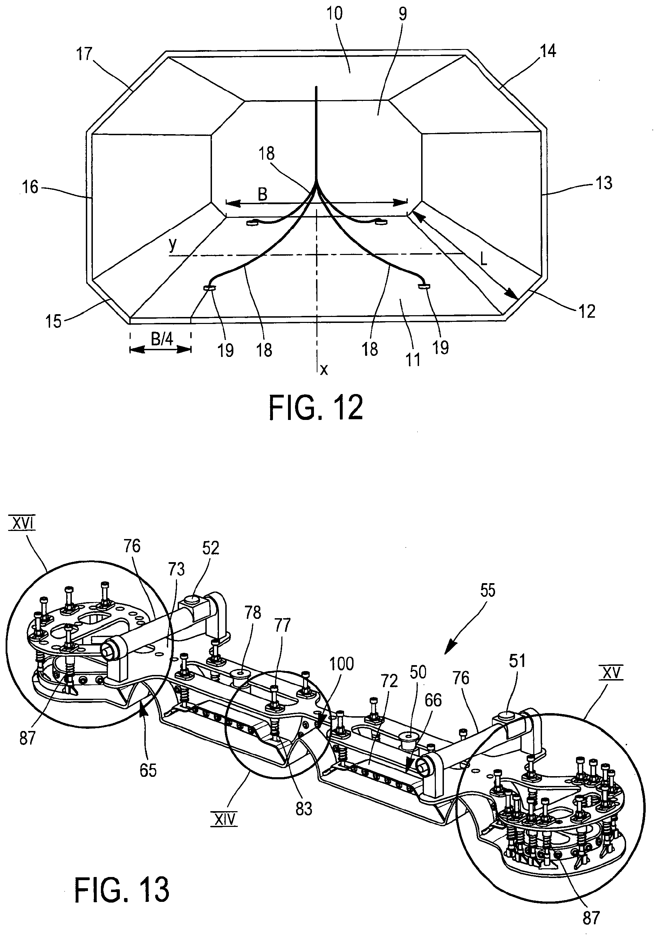

La figure 13 représente une cloche de détection 55 selon un quatrième mode de réalisation où le moyen mécanique de pression 66 a été renforcé aux extrémités de la cloche de détection 55 pour palier à la non planéité de la zone. La cloche de détection 55 de la figure 13 est conçue similairement à la cloche de détection 55 de la figure 8 mais diffère notamment par la forme de la chambre de détection qui présente deux zones circulaires aux deux extrémités longitudinales qui sont plus larges qu'une bande rectiligne centrale. D'autres différences concernent le moyen mécanique de pression 66. En effet, la cloche de détection 55 de la figure 13 comprend également un corps principal 100 s'étendant dans une direction longitudinale, un joint d'étanchéité 60 souple fixé sur le corps principal 100 et un moyen mécanique de pression 66 porté par le corps principal et configuré pour exercer une pression dirigée vers la membrane 5, 8 sur le joint d'étanchéité 60. Toutefois, le moyen mécanique de pression 66 comprend ici des éléments de pression 72 et des éléments de pression d'extrémité 87.

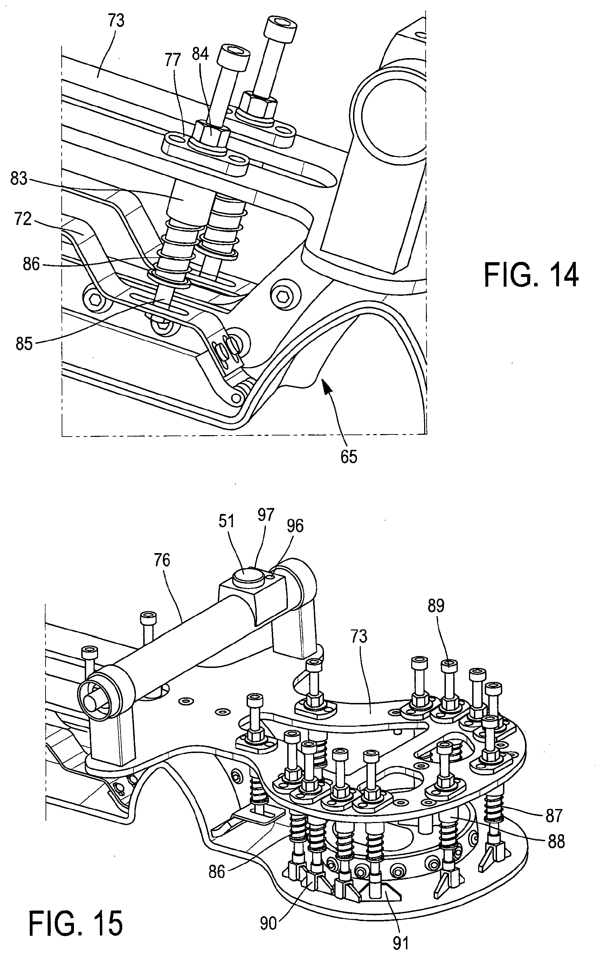

Les éléments de pression 72 comportent chacun une lame courbée 72 dont au moins une extrémité vient en butée sur la base d'une échancrure 62. Les lames courbées 72 situées entre deux échancrures contiguës comportent quant à elle l'une de leurs extrémités qui est située contre la base de l'une des échancrures 65 et l'autre des extrémités qui est située contre la base de l'autre des échancrures 65. Les éléments de pression 72 sont ici, comme illustré sur la figure 14, fixés par des moyens de fixation 77 comportant chacun un pion 83. Les pions 83 comportent chacun une tige 85 montée mobile sur un corps 84. La tige 85 comporte une extrémité en appui contre l'une des lames courbées 72. Le corps 84 est fixé à l'élément de support 73. Le pion 83 comporte également un ressort 86 reliant la tige 85 au corps 84, le ressort 86 agissant entre le corps 84 et la tige 85 afin de positionner l'extrémité de la tige 85 en appui contre la lame courbée 72. Ainsi, le ressort 86 est configuré pour exercer une force de rappel sur la lame courbée 72 de sorte que la lame courbée 72 vienne plaquer la lèvre d'étanchéité 64 contre le pied de l'ondulation.

Les éléments de pression d'extrémité 87 sont situés aux deux extrémités de la lèvre d'étanchéité 64 dans une direction longitudinale, soit aux deux extrémités de la cloche de détection de fuite 55 étant donné que cette dernière présente une forme générale longitudinale. Les éléments de pression d'extrémité 87 peuvent être conçus selon une pluralité de variantes distinctes combinables ou non sur une même cloche de détection de fuite 55. Par soucis de concision, trois variantes des éléments de pression d'extrémité 87 sont illustrées sur la figure 13 sur une même cloche de détection de fuite 55.

Les figures 15 à 17 représentent les trois variantes des éléments de pression d'extrémité 87. Comme illustré sur la figure 15 selon la première variante, l'élément de pression d'extrémité 87 comprend un pion d'extrémité 88. Les pions d'extrémité 88 comportent chacun une tige 90 montée mobile sur un corps 89. Un élément d'appui allongé 91 est fixé à une extrémité de la tige 90, l'élément d'appui allongé 91 venant en appui contre la lèvre d'étanchéité 64. Le corps 89 est fixé à l'élément de support 73. Le pion d'extrémité 88 comporte également un ressort 86 reliant la tige 90 au corps 89, le ressort 86 agissant entre le corps 89 et la tige 90 afin de positionner l'élément d'appui allongé 91 contre la lèvre d'étanchéité 64. Ainsi, le ressort 86 est configuré pour exercer une force de rappel sur l'élément d'appui allongé 91 de sorte que l'élément d'appui allongé 91 vienne plaquer la lèvre d'étanchéité 64 contre la zone à tester. De cette manière, l'effort de rappel est exercé sur la lèvre d'étanchéité 64 sur toute la longueur de l'élément d'appui allongé 91. Dans le cas de la première variante de la figure 15, chaque élément d'appui allongé 91 n'est fixé qu'à une seule tige 90 d'un pion d'extrémité 88.

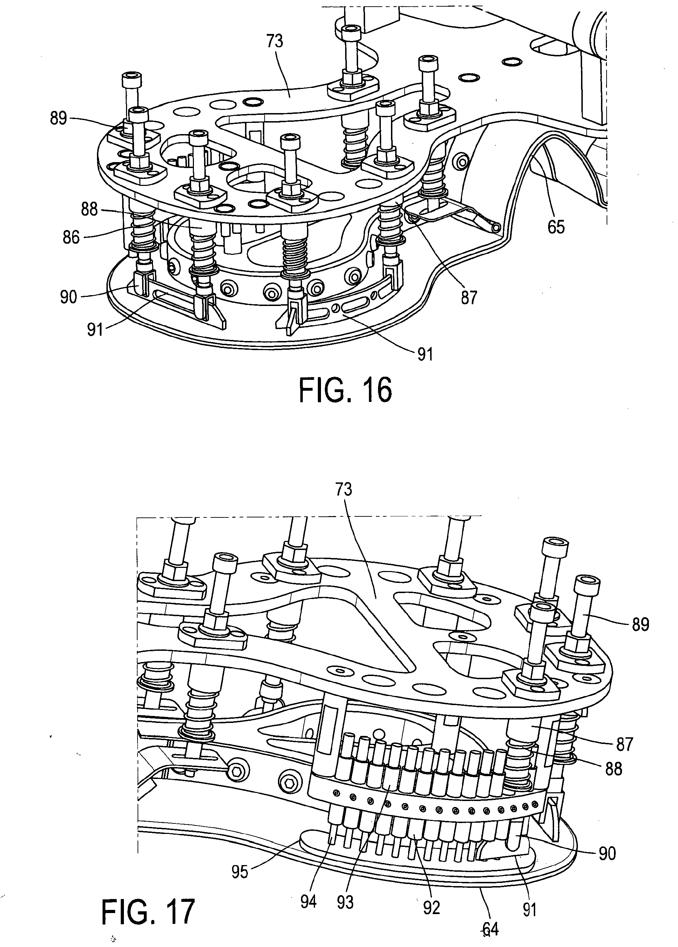

Une deuxième variante des éléments de pression d'extrémité 87 est illustrée sur la figure 16. La deuxième variante diffère de la première variante par l'élément d'appui allongé 91 des pions d'extrémité 88, les autres caractéristiques des éléments de pression d'extrémité 87 sont conservées. Dans cette variante, l'élément d'appui allongé 91 est fixé à une extrémité d'une tige 90 d'un premier pion d'extrémité 88 et à une extrémité d'une tige 90 d'un deuxième pion d'extrémité 88 adjacent au premier pion d'extrémité 88. L'élément d'appui allongé 91 est donc ici plus long que dans la première variante et est ainsi plaqué par deux pions d'extrémité 88 répartis sur sa longueur de sorte à former un appui d'une longueur plus importante sur la lèvre d'étanchéité 64.

Une troisième variation des éléments de pression d'extrémité 87 est illustrée sur la figure 17. Dans cette variante, l'élément de pression d'extrémité 87 comprend une pluralité d'éléments de réglage 92 formant une ligne d'éléments. L'élément de réglage 92 comprend une tige 93 s'étendant en direction de la lèvre d'étanchéité 64 et perpendiculairement à la zone à tester et une extrémité 94 dont la position est réglable dans une direction longitudinale de la tige de sorte à venir en contact avec la lèvre d'étanchéité 64 après réglage de la tige 93. Ainsi, il est possible de régler plus finement l'élément de pression d'extrémité 87 grâce aux éléments de réglage 92 afin d'épouser plus précisément la zone à tester et donc d'améliorer l'étanchéité de la chambre de détection 61.

La figure 17 illustre aussi une semelle de répartition 95 qui peut être agencée entre les extrémités 94 des tiges 93 et la surface supérieure de la lèvre d'étanchéité 64, afin de limiter le risque de poinçonnement de la lèvre d'étanchéité 64 et ainsi accroitre sa durabilité. La semelle de répartition 95 peut être une plaque allongée de forme générale rectiligne ou, comme représentée, arquée pour suivre le contour de la lèvre d'étanchéité 64. Sa matière peut être une résine plastique rigide. De préférence, des manchons de liaison sous formés saillants sur la surface supérieure de la semelle de répartition 95 pour accueillir les extrémités 94 et ainsi fixer la semelle de répartition 95 par rapport aux tiges 93.

Il va être décrit par la suite un procédé d'utilisation d'une cloche de détection de fuite 65 telle qu'illustrée à la figure 8 dans un dispositif de détection de fuite 54 comprenant ladite cloche 65, une pompe à vide 57 raccordée à la chambre de détection 61 via la sortie de gaz 78 et un équipement d'analyse 56. L'utilisation d'un tel dispositif de détection 54 permet de contrôler l'étanchéité d'un cordon de soudure 62 entre deux tôles ondules d'une membrane d'étanchéité 5, 8.

Tout d'abord, la cloche de détection 55 est placée sur la zone à tester l'étanchéité ici une partie du cordon de soudure 62, par exemple par un ou plusieurs opérateurs via les poignées de manutention 76. Pour cela, le corps principal 100 de la cloche de détection 55 est placé au-dessus du cordon de soudure 62 de manière que la longueur du corps principal 100 soit alignée avec et centrée sur le cordon de soudure 62. Le cas échéant, un dispositif de visée décrit plus haut peut être employé pour cela. Ainsi, la lèvre d'étanchéité 64 se trouve de part et d'autre du cordon de soudure 62 et entoure complètement la zone du cordon de soudure 62 à tester pour former avec le corps principal 100 et la membrane 5, 8 une chambre de détection 61 étanche, comme visible sur la figure 9.

Après que la cloche de détection 55 a été placée sur le cordon de soudure 62, la cloche de détection 55 se fixe comme une ventouse sur la membrane 5, 8 grâce à la force de dépression activée par la pompe à vide 57. Cette force de dépression active, le cas échéant, le moyen mécanique de pression 66 de manière qu'il redirige la pression afin de presser la lèvre d'étanchéité 64 sur la membrane 5, 8 dans certaines zones bien définies.

Lorsque le moyen mécanique de pression 66 subit un effort sur l'élément support 73, l'élément support 73 retransmet l'effort aux lames courbées 72 via leurs fixations respectives ce qui tend à déformer élastiquement les lames courbées 72. De ce fait et par retour élastique, les lames courbées 72 transmettent l'effort à la lèvre d'étanchéité 64 via les manchons cylindriques 75 aux zones où le décollement de la lèvre d'étanchéité est le plus probable à savoir les extrémités longitudinales du corps principal 100 et les bases des échancrures 65.

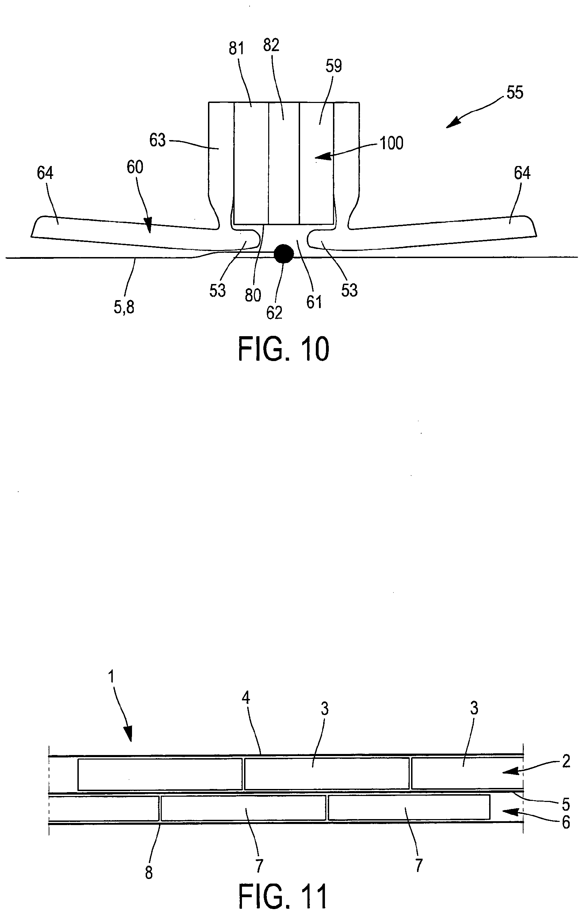

La pompe à vide 57 crée une dépression dans la chambre de détection 61 via le canal 82 et la sortie de gaz 78. La souplesse de la lèvre d'étanchéité 64 entraine une déformation de celle-ci lors de la dépression de la chambre de détection 61 tendant à diminuer le volume de la chambre de détection 61. En effet, la lèvre d'étanchéité 64 se rapproche ainsi de part et d'autre du cordon de soudure 62 comme visible sur la figure 10. Dès lors que la pression à l'intérieur de la chambre de détection 61 passe en dessous d'un seuil de pression Ps, les gaz présents dans la chambre de détection 61 sont conduits vers l'équipement d'analyse 56.

L'équipement d'analyse 56 analyse alors au court d'une durée de mesure Tm la concentration en gaz des gaz présents dans la chambre de détection 61 de manière à obtenir une valeur représentative de l'évolution de la concentration. Cette valeur représentative est alors comparée à une valeur seuil de manière à déterminer si la partie du cordon de soudure 62 testée présente ou non un défaut d'étanchéité.

Si la valeur mesurée est inférieure à la valeur seuil, alors il est conclu que la partie testée ne présente pas de défaut d'étanchéité et dans ce cas, la cloche de détection 55 est alors disposée en regard d'une portion adjacente du cordon de soudure 62 en assurant un recouvrement entre les deux portions successivement testées de manière à garantir que l'étanchéité du cordon de soudure 62 ait été testée sur toute la longueur dudit cordon de soudure 62.

Si la valeur mesurée est supérieure ou égale à la valeur seuil, alors il est conclu que la partie testée du cordon de soudure 62 présente un défaut d'étanchéité. Des mesures de soudure correctives sont alors mise en œuvre afin de corriger le défaut. Des mesures à l'aide d'un outil de détection complémentaire peuvent également être envisagées de manière à localiser de manière plus précise le lieu du défaut d'étanchéité.

Ainsi, selon l'invention, la lèvre d'étanchéité 64 occupe deux positions selon qu'elle se trouve dans son état initial, soit sans l'application d'une dépression dans la chambre de détection 61, ou dans son état de service, lorsqu'une telle dépression est appliquée.

Dans son état initial, la lèvre d'étanchéité 64 repose sans pression sur la surface d'une membrane d'étanchéité 5, 8 tandis que dans son état de service au moins une portion de pincement 53 située à une extrémité intérieure de la lèvre d'étanchéité 64 se trouve pressée sous le corps principal 100 de manière à parfaitement étanchéifier le contour ou la périphérie de la chambre de détection 61. En effet, grâce à la souplesse de la lèvre d'étanchéité 64, celle-ci vient se pincer entre le corps principal 100 et la membrane 5, 8 lors de l'application de la dépression. Ce positionnement de la portion de pincement 53 de la lèvre d'étanchéité 64 entre le corps principal 100, écrasée ou comprimée par celui-ci, et la membrane d'étanchéité 5, 8 contribue efficacement à obtenir une parfaite étanchéité de la chambre de détection 61, permettant ainsi d'obtenir et de tenir un vide d'au plus 1500 Pa (15 mbar), voire présentant une pression bien inférieure.

Ainsi, selon un mode d'exécution préféré, la lèvre d'étanchéité 64 présente un état de service, lorsqu'une dépression est appliquée dans la chambre de détection 61, dans lequel une portion de pincement 53 de la lèvre d'étanchéité 64 est maintenue entre le corps principal 100 et la membrane d'étanchéité 5, 8 sur au moins une partie de la périphérie de la chambre de détection 61, voire sur toute la périphérie de ladite chambre 61. Grâce à ce pincement, il est possible de se passer de tout ou partie du moyen mécanique de pression décrit plus haut.

Dans une variante de réalisation, la lèvre d'étanchéité périphérique 64 est formée avec la portion de pincement 53 faisant saillie en permanence sous le corps principal 100, c'est-à-dire également dans l'état initial sans dépression, par exemple tout autour de la chambre de détection 61 ou sur une partie de sa périphérie.

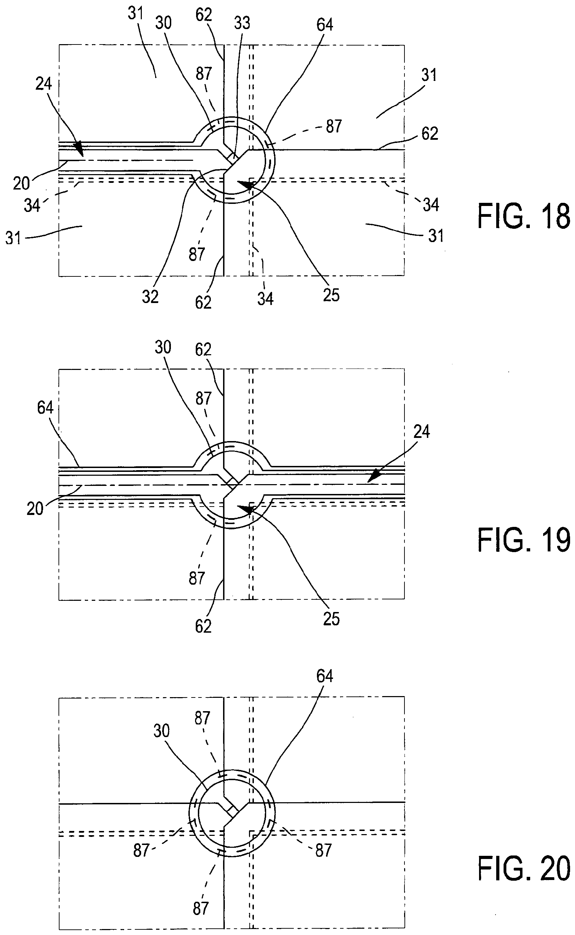

Comme indiqué plus haut, la zone à tester peut être une zone de jonction entre plusieurs tôles métalliques, par exemple quatre tôles métalliques rectangulaires, ondulées ou non. Une telle utilisation de la cloche de détection 55 va maintenant être décrite en référence aux figures 18 à 20.

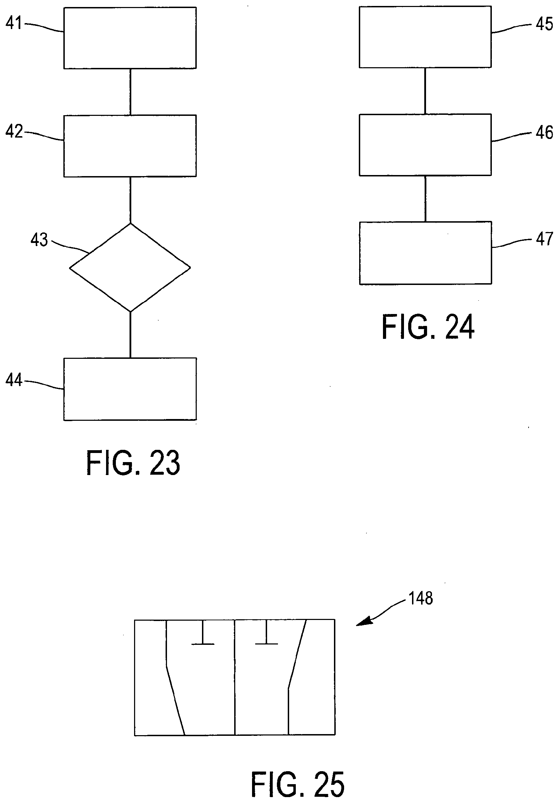

Concernant une zone de jonction entre plusieurs tôles rectangulaires planes, on peut par exemple se référer à la publication EP-A-0064886. La publication US-A-4021982 illustre à la figure 24 une zone de jonction entre plusieurs tôles rectangulaires ondulées. Dans ces exemples comme dans celui de la figure 18, chacune des quatre tôles métalliques rectangulaires 31 comporte un pan coupé 32 au niveau du coin, par exemple formant un angle de 45° avec les bords de la tôle. Les quatre pans coupés 32 sont approchés les uns des autres à recouvrement sur un insert métallique 33 fixé sur le massif isolant et dont une zone centrale, ici de forme carrée, reste découverte entre les quatre pans coupés 32. Cette zone centrale de l'insert métallique 33 forme une partie de la membrane étanche grâce aux lignes de soudure étanches réalisées le long des pans coupés 32.

Les lignes 34 en traits interrompus représentent des courbures de décalage dans la direction d'épaisseur des tôles métalliques rectangulaires 31 qui permettent les recouvrements mutuels, selon la technique connue.

Sur la figure 18, la cloche de détection présente une forme correspondant au mode de réalisation de la figure 13. On a esquissé la position de la cloche de détection en représentant le contour de la lèvre d'étanchéité 64 et le contour 30 de la chambre de détection 61, qui est partiellement représentée. En particulier, la zone circulaire 25 de la chambre de détection 61 est positionnée au droit de la zone de jonction précitée, par exemple centrée sur la partie découverte de l'insert métallique 33, tandis que la bande rectiligne centrale 24 de la chambre de détection 61 est positionnée sur un bord rectiligne d'une des tôles métalliques rectangulaires 31. La zone circulaire 25 de la chambre de détection 61 présente un diamètre adapté à complètement englober les quatre pans coupés 32 au droit de la zone de jonction précitée. Pour cela, son, diamètre est par exemple supérieur à 68mm pour une membrane ondulée de type Mark III^{®}.

Sur la figure 18, les éléments de pression d'extrémité 87 ont été esquissés en traits interrompus. On peut ainsi remarquer que les éléments de pression d'extrémité 87 ont été positionnés sur la cloche de détection de manière que, lorsque la cloche de détection est positionnée à cet emplacement, les éléments de pression d'extrémité 87 se trouvent en fait au droit des cordons de soudure 62 qui joignent les tôles métalliques rectangulaires 31 entre elles le long des bords. Ainsi, les éléments de pression d'extrémité 87 appuient sur les portions de la lèvre d'étanchéité périphérique 64 qui reposent sur ces cordons de soudure 62, lesquels présentent nécessairement un certain relief. Les éléments de pression d'extrémité 87 ainsi positionnés rendent possible l'obtention d'un contact parfaitement étanche malgré ce relief. En particulier, on voit sur la figure 18 que trois éléments de pression d'extrémité 87 appuient sur trois portions de la lèvre d'étanchéité périphérique 64 qui traversent respectivement trois cordons de soudure 62 de cette zone de jonction.

Les éléments de pression d'extrémité 87 illustrés sur la figure 18 présentent de préférence une forme allongée rectiligne ou curviligne. Ils peuvent notamment être réalisés sous la forme d'éléments d'appui allongés 91 comme sur la figure 16 ou avec une semelle de répartition 95 comme sur la figure 17.

D'autres géométries de la cloche de détection peuvent être envisagées pour cette utilisation. Dans le mode de réalisation de la figure 19, la cloche de détection présente une forme modifiée dans laquelle la zone circulaire 25 constitue une portion centrale de la chambre de détection 61 et la chambre de détection 61 présente deux zones allongées 24 s'étendant depuis la zone circulaire 25 de manière diamétralement opposée l'une de l'autre le long de l'axe longitudinal médian 20. Dans le mode de réalisation de la figure 20, la cloche de détection présente une forme modifiée dans laquelle la chambre de détection 61 présente une forme circulaire.

Dans le cas de la figure 19, on voit que deux éléments de pression d'extrémité 87 appuient sur deux portions de la lèvre d'étanchéité périphérique 64 qui traversent respectivement deux cordons de soudure 62 de cette zone de jonction, à des emplacements qui sont diamétralement opposés autour de la zone circulaire 25. Dans le cas de la figure 20, on voit que quatre éléments de pression d'extrémité 87 appuient sur quatre portions de la lèvre d'étanchéité périphérique 64 qui traversent respectivement quatre cordons de soudure 62 de cette zone de jonction.

En variante une forme polygonale convexe peut être employée au lieu de la zone circulaire 25, auquel cas un cercle géométriquement inscrit dans la forme de la chambre de détection doit présenter un diamètre adapté à complètement englober les quatre pans coupés 32 au droit de la zone de jonction précitée.

En référence aux figures 22 à 25 on va maintenant décrire un mode de réalisation du dispositif de détection de fuite 54 dans lequel la cloche de détection 55 selon le quatrième mode de réalisation peut être employée.

Le dispositif de détection de fuite 54 comporte la cloche de détection 55, l'équipement d'analyse 56 avec sa pompe à vide associée 57, éventuellement une deuxième pompe à vide 37 de plus forte puissance, et un circuit d'aspiration reliant la chambre de détection 61 à l'équipement d'analyse 56 par l'intermédiaire d'une électrovanne 48. Le circuit d'aspiration comporte de préférence un tuyau flexible 58 d'assez grande longueur pour favoriser la mobilité de la cloche de détection 55 sur une zone de travail relativement étendue autour de l'équipement d'analyse 56. Ce tuyau flexible 58 est par exemple raccordé par des connecteurs 39, d'une part à une sortie de la chambre de détection 61 et d'autre part à l'équipement d'analyse 56. Lorsqu'une deuxième pompe à vide 37 est employée, un raccord de dérivation 38 peut être prévu pour relier l'équipement d'analyse 56 et la deuxième pompe à vide 37 en dérivation l'un de l'autre.

Une unité de commande 36 est également prévue pour piloter l'électrovanne 48, et éventuellement d'autres éléments comme l'équipement d'analyse 56, en réponse à des actions d'un opérateur sur un ou plusieurs organes de commande de la cloche de détection 55, par exemple disposés sur une ou plusieurs poignées de manutention 76 de la cloche de détection 55.

Par exemple, dans le cas de la cloche de détection 55 selon le quatrième mode de réalisation, les deux poignées de manutention 76 sont munies chacune d'un bouton poussoir actionnable avec le pouce et configuré respectivement comme bouton d'activation 51 et bouton de désactivation 52. Des organes de commande présentant une autre forme qu'une bouton poussoir peuvent être envisagées alternativement, par exemple un bouton tactile capacitif, un levier basculant, ou tout autre organe actionnable manuellement.

Dans un mode de fonctionnement préféré, la pompe à vide 37 ou autre source de dépression est préalablement activée et génère de manière permanente une dépression dans le circuit d'aspiration. L'électrovanne 48 présente un état fermé par défaut, de sorte que la chambre de détection 61 n'est pas initialement soumise à la dépression, ce qui permet de déplacer librement la cloche de détection 55 sur la membrane 5, 8.

Partant de cet état, les procédés de commande illustrés sur les figures 23 et 24 peuvent être mis en œuvre par l'unité de commande 36 :

A l'étape 41, un signal de commande d'activation émis par le bouton d'activation 51 est détecté.

A l'étape 42, l'électrovanne 48 est commutée dans un état ouvert pour relier la chambre de détection 61 à la pompe à vide 37. Cet état peut être signalé par l'allumage d'un indicateur lumineux sur la cloche de détection 55, par exemple une LED rouge, par exemple sur la poignée de manutention 76 comme illustré au chiffre 96 de la figure 15.

Il se produit alors une aspiration dans la chambre de détection 61. Si la cloche de détection 55 est correctement positionnée sur la membrane avec la lèvre d'étanchéité 24 en contact étanche avec la membrane 5, 8 tout autour de la chambre de détection 61, la dépression s'installe et plaque solidement la cloche de détection 55 contre la membrane 5, 8 en écrasant la lèvre d'étanchéité 24. L'analyse du gaz issu de la chambre de détection 61 peut alors être effectuée comme expliqué plus haut.

A l'étape 45, un signal de commande de désactivation émis par le bouton de désactivation 52 est détecté.

A l'étape 46, l'électrovanne 48 est commutée dans un état fermé pour isoler la chambre de détection 61 de la pompe à vide 37. La dépression dans la chambre de détection 61 n'est plus entretenue, ce qui permet à la pression de remonter. Toutefois, sauf débit de fuite important, cette remontée de la pression peut être très lente.

De préférence, à l'étape 47, un évent est donc ouvert pour mettre en communication la chambre de détection 61 avec l'atmosphère ambiante, ce qui permet de libérer immédiatement la cloche de détection 55 de la membrane 5, 8.

Dans un mode de réalisation, les étapes 46 et 47 sont effectuées simultanément en commutant une vanne à trois voies 148 schématisée sur la figure 25, qui est utilisée à la place de l'électrovanne 48 de la figure 22.

L'électrovanne 48 peut être positionnée sur la sortie de gaz 78 de la cloche de détection 55, comme illustré sur la figure 22. Elle peut aussi être positionnée à un autre emplacement dans le circuit d'aspiration, par exemple au niveau du raccord de dérivation 38 comme indiqué par le chiffre 248.

Les signaux de commande entre l'unité de commande 36, l'électrovanne 48 et les bouton d'activation 51 et bouton de désactivation 52 sont transportés par des liaisons de communication 35 filaires ou non filaires, par exemple réalisée sous la forme d'une câble électrique souple ou une tresse de câbles souples pour favoriser la mobilité de la cloche de détection 55.

Dans un mode de réalisation, l'unité de commande 36 est configurée pour piloter aussi l'équipement d'analyse 56. Pour cela, une liaison de communication 35 filaire ou non filaire est également prévue entre l'unité de commande 36 et l'équipement d'analyse 56. De plus, un capteur de pression 49 également relié à l'unité de commande 36 est prévu sur la cloche de détection 55 pour mesurer la pression dans la chambre de détection 61 à la suite de l'étape 42.

Dans ce cas, le procédé de commande réalisé à la suite du signal de commande d'activation se poursuit de la manière suivante :

A l'étape 43 la pression indiquée par le signal de mesure du capteur de pression 49 est comparée à un seuil de pression prédéfini pour permettre le fonctionnement de l'équipement d'analyse 56. Si la pression mesurée est inférieure à ce seuil, l'étape 44 est effectuée. Cet état peut être signalé par l'allumage d'un autre indicateur lumineux sur la cloche de détection 55, par exemple une LED verte, par exemple sur la poignée de manutention 76 comme illustré au chiffre 97 de la figure 15.

A l'étape 44 l'équipement d'analyse 56 est activé pour réaliser un cycle d'analyse permettant de détecter un débit de fuite, comme expliqué plus haut.

Dans le cas de la cloche de détection selon le quatrième mode de réalisation illustrée à la figure 13 ou 21, deux canaux 82 et 50 traversent le corps principal pour relier la chambre de détection 61 à deux sorties de gaz 78 et 50. Le capteur de pression 49 peut être placé sur la cloche de détection 55 été relié à la sortie de gaz 50, comme illustré sur la figure 22. Le capteur de pression 49 pourrait aussi être agencé à une autre position.

Grâce aux procédés de commande décrits ci-dessus, et en particulier avec la cloche de détection selon le quatrième mode de réalisation, l'utilisation du dispositif de détection de fuite 54 est particulièrement aisée et rapide.

La source de dépression étant préalablement activé, l'opérateur saisit la cloche de détection 55 par les deux poignées et positionne la cloche de détection 55 sur la zone de test choisie, le cas échéant en s'aidant des dispositifs de visée décrits plus haut.

Puis l'opérateur presse le bouton d'activation 51. Le procédé de la figure 23 s'exécute alors jusqu'à obtention d'une mesure représentative du débit de fuite par l'équipement d'analyse 56.

L'opérateur n'a plus qu'à presser le bouton de désactivation 52 pour positionner la cloche de détection 55 sur une autre zone de test. La cloche de détection 55 peut donc être employée sans que l'opérateur n'ait besoin d'interagir avec la pompe à vide 37, l'unité de commande 36 ou l'équipement d'analyse 56, dans toute une zone de travail définie par la longueur des liaisons fluidiques et électriques de la cloche de détection 55 avec ces éléments. Pour favoriser la mobilité du dispositif de détection de fuite 54 à une plus grande échelle, la pompe à vide 37, l'unité de commande 36 et l'équipement d'analyse 56 peuvent être montés sur un chariot roulant, non illustré.

Dans un autre mode de réalisation non représenté, les différentes caractéristiques des modes de réalisation précédents sont combinables entre elles. En effet par exemple, les moyens mécaniques de pression 66 de la figure 8 sont adaptables à un joint d'étanchéité 60 de la figure 5 en modifiant l'agencement des lames courbées 72.

La cloche de détection, le dispositif de détection et le procédé d'utilisation du dispositif décrits ci-dessus visent plus particulièrement à tester l'étanchéité d'une membrane d'une cuve étanche et thermiquement isolante à membranes. A titre d'exemple, de telles cuves à membranes sont notamment décrites dans les demandes de brevet WO14057221, FR2691520.

Les cuves à membrane présentent une pluralité de parois qui présentent une structure multicouche, telle que représentée sur la figure 11. Chaque paroi 1 comporte, depuis l'extérieur vers l'intérieur de la cuve, une barrière thermiquement isolante secondaire 2 comportant des panneaux isolants secondaires 3 ancrés à une structure porteuse 4, une membrane secondaire 5 reposant contre la barrière thermiquement isolante secondaire 2, une barrière thermiquement isolante primaire 6 comportant des panneaux isolants primaires 7 reposant contre la membrane secondaire 2 et ancrés à la structure porteuse 4 ou aux panneaux isolants secondaires 3 et une membrane primaire 8 qui repose contre la barrière thermiquement isolante primaire 6 et qui est destinée à être en contact avec le gaz liquéfié contenu dans la cuve.

La cuve présente une forme générale polyédrique. Dans le mode de réalisation illustré sur la figure 12, la cuve présente une paroi avant 9 et une paroi arrière, non représentée, qui sont ici de forme octogonale. La cuve comporte également une paroi de plafond 10, une paroi de fond 11 et des parois latérales 11, 12, 13, 14, 15, 16, 17 qui s'étendent selon la direction longitudinale de la cuve entre la paroi avant 9 et la paroi arrière.

Les barrières thermiquement isolantes secondaires 2 des parois de cuve communiquent les unes avec les autres de manière à former, entre la structure porteuse 4 et la membrane secondaire 5, un espace thermiquement isolant secondaire, étanche. De même, les barrières thermiquement isolantes primaires 6 des parois de cuve communiquent les unes avec les autres de manière à former, entre la membrane secondaire 5 et la membrane primaire 8, un espace thermiquement isolant primaire, étanche.

Au moins l'une des membranes primaire 8 et secondaire 5 comporte une pluralité de tôles métalliques qui sont soudées les unes aux autres. Le procédé de test d'étanchéité qui sera décrit par la suite vise plus particulièrement à tester l'étanchéité des soudures permettant de raccorder les tôles métalliques les unes aux autres. Selon un mode de réalisation, la membrane à tester présente des ondulations qui lui permettent de se déformer sous l'effet des sollicitations thermiques et mécaniques générées par le fluide emmagasiné dans la cuve. Pour ce faire, comme représenté par exemple sur la figure 8, chaque tôle métallique comporte deux séries d'ondulations perpendiculaires l'une à l'autre.

Dans un mode de réalisation, le procédé de test d'étanchéité comporte trois étapes, à savoir :
- la diffusion d'un gaz traceur dans un espace thermiquement isolant recouvert par la membrane 5, 8 dont on souhaite tester l'étanchéité ;
- le contrôle de la diffusion du gaz traceur dans l'espace thermiquement isolant ; et
- la vérification de l'étanchéité des soudures de la membrane 5, 8.

Dans un autre mode de réalisation, le procédé de test d'étanchéité comporte seulement la vérification de l'étanchéité des soudures de la membrane 5, 8 sans l'aide de gaz traceur.

L'étape de diffusion d'un gaz traceur consiste à injecter un gaz traceur dans l'espace thermiquement isolant qui est recouvert par la membrane 5, 8 dont on souhaite vérifier l'étanchéité. Lorsque l'on souhaite vérifier l'étanchéité de la membrane secondaire 5, le gaz traceur est injecté dans l'espace thermiquement isolant secondaire. Dans ce cas, le procédé de test d'étanchéité est mis en œuvre avant que la barrière thermiquement isolante primaire 7 et la membrane primaire 8 ne soient installées. Lorsque l'on souhaite vérifier l'étanchéité de la membrane primaire 8, le gaz traceur est injecté dans l'espace thermiquement isolant primaire.

La figure 12 illustre schématiquement une cuve étanche et thermiquement isolante ainsi qu'un système d'injection du gaz traceur dans un espace thermiquement isolant.

Le système d'injection comporte une pluralité de conduits 18 qui sont, d'une part, reliés à une source de gaz traceur, non illustrée, et, d'autre part, reliés à des dispositifs d'injection du gaz traceur 19 ménageant un passage d'injection du gaz traceur au travers de la membrane 5, 8 dont l'étanchéité doit être testée. Plus particulièrement, les dispositifs d'injection du gaz traceur 19 ménagent des passages de gaz traceur au travers de la membrane de la paroi de fond 11. Une telle disposition est particulièrement avantageuse car le gaz traceur présente une densité de vapeur plus faible que celle de l'air de sorte qu'il a tendance à monter dans l'espace thermiquement isolant. Dès lors, l'injection du gaz traceur par le bas, au travers de la membrane 5, 8 à tester de la paroi de fond 11, permet d'assurer une diffusion rapide et homogène du gaz traceur dans l'espace thermiquement isolant.

Dans le mode de réalisation représenté sur la figure 12, la paroi de fond 11 est équipée d'au moins quatre dispositifs d'injection du gaz traceur 19 qui sont régulièrement répartis sur la surface de la paroi de fond 11. La paroi de fond 11 présente une forme rectangulaire et peut ainsi être divisée en quatre zones de surface égale par ses deux axes de symétrie x et y. Chacun des quatre dispositifs d'injection du gaz traceur 19 est disposé dans l'une des quatre zones précitées. Dans le mode de réalisation particulier illustré, chaque dispositif d'injection du gaz traceur 19 est disposé à proximité du centre de sa zone respective. Dans un mode de réalisation particulier, chacun des quatre dispositifs d'injection du gaz traceur est disposé à une distance ¼ L du bord longitudinal adjacent et à une distance ¼ B du bord transversal adjacent avec L : la dimension longitudinale de la paroi de fond 11 et B : la dimension transversale de la paroi de fond 11.

L'étape de contrôle de diffusion de gaz traceur consiste à lorsque le gaz traceur a diffusé au travers de l'espace thermiquement isolant, contrôler la diffusion du gaz traceur dans l'espace thermiquement isolant.

Pour ce faire, l'on prélève le gaz contenu dans l'espace thermiquement isolant dans lequel l'on a injecté le gaz traceur au moyen d'une pluralité de dispositifs de prélèvement de gaz ménagés au travers de la membrane recouvrant ledit espace thermiquement isolant. Chaque dispositif de prélèvement est relié à un équipement d'analyse, tel qu'un spectromètre de masse, qui permet de vérifier la présence et la concentration du gaz traceur dans la zone correspondante de l'espace thermiquement isolant.

L'étape de vérification des soudures consiste à utiliser le dispositif de détection de fuite 54, précédemment décrit, sur l'une des membranes 5, 8 de la cuve étanche et thermiquement isolante.

## Revendications

1. Dispositif de détection de fuite (54) pour détecter une fuite sur une zone de test (62) d'une membrane d'étanchéité (5, 8) d'une cuve étanche et thermiquement isolante, le dispositif de détection de fuite (54) comportant :
- une cloche de détection de fuite (55) comprenant un corps principal (100) destiné à être disposé sur la zone de test (62) et un joint d'étanchéité (60) lié au corps principal (100) et configuré pour définir une chambre de détection (61) entre le corps principal (100) et la zone de test (62), le joint d'étanchéité (60) comportant une lèvre d'étanchéité (64) périphérique configurée pour venir en contact avec la membrane d'étanchéité et présentant un contour fermé entourant la chambre de détection (61),
- une pompe à vide (57) raccordée à la chambre de détection (61) pour générer une dépression dans la chambre de détection (61), et
- un équipement d'analyse (56) relié à la chambre de détection (61) pour analyser un gaz présent dans la chambre de détection (61),
dans lequel la lèvre d'étanchéité (64) est configurée pour occuper deux positions à savoir une première position dans un état initial, sans l'application d'une dépression dans la chambre de détection (61), et une deuxième position dans un état de service, avec application d'une dépression dans la chambre de détection (61), **caractérisé en ce que** la lèvre d'étanchéité (64) comprend uniquement dans la deuxième position relative à l'état de service une portion de pincement (53) qui vient se pincer entre le corps principal (100) et la membrane d'étanchéité (5, 8) sur au moins une partie de la périphérie de la chambre de détection (61), la lèvre d'étanchéité (64) présentant une souplesse permettant la formation de ladite portion de pincement (53) par déformation de la lèvre d'étanchéité (64) en direction de la chambre de détection (61) sous l'effet de la dépression dans la chambre de détection (61).

2. Dispositif selon la revendication 1, dans lequel la lèvre d'étanchéité (64) est configurée pour présenter, au moins dans un état de service dans lequel une dépression est appliquée dans la chambre de détection (61), une portion de pincement (53) qui vient se pincer entre le corps principal (100) et la membrane d'étanchéité (5, 8) sur toute la périphérie de la chambre de détection (61).

3. Dispositif selon l'une des revendications 1 à 2, dans lequel la chambre de détection (61) de la cloche de détection de fuite (55) présente une zone convexe (25), par exemple circulaire ou en forme de polygone, destinée à recouvrir une zone de jonction entre quatre tôles métalliques (31) ondulées ou planes.

4. Dispositif selon la revendication 3, dans lequel un cercle géométriquement inscrit dans la zone convexe (25) présente un diamètre supérieur à 68 mm.

5. Dispositif selon la revendication 3 ou 4, dans lequel la cloche de détection présente une forme allongée le long d'un axe longitudinal, la chambre de détection (61) de la cloche de détection de fuite (55) présentant une zone allongée (24) destinée à recouvrir un bord rectiligne d'une tôle métallique, la zone convexe (25) étant disposée à une extrémité de la zone allongée.

6. Dispositif selon la revendication 5, dans lequel la zone convexe est une première zone convexe (25) et la chambre de détection (61) de la cloche de détection de fuite (55) présente une deuxième zone convexe disposée à une extrémité de la zone allongée opposée à la première zone convexe (25) le long de l'axe longitudinal.

7. Dispositif selon la revendication 3 ou 4, dans lequel la cloche de détection présente une forme allongée le long d'un axe longitudinal, la zone convexe (25) constituant une portion centrale de la chambre de détection (61) de la cloche de détection de fuite (55), la chambre de détection (61) présentant deux zones allongées (24) s'étendant depuis la zone convexe à l'opposé l'une de l'autre le long de l'axe longitudinal.

8. Dispositif selon la revendication 3, dans lequel la chambre de détection (61) présente une forme circulaire ou polygonale convexe.

9. Dispositif selon la revendication 8, dans lequel un cercle géométriquement inscrit dans la forme de la chambre de détection présente un diamètre supérieur à 68mm.

10. Dispositif selon l'une des revendications 1 à 9, dans lequel la cloche de détection de fuite (55) comporte un moyen mécanique de pression (66) porté par le corps principal (100) et comportant au moins un élément de pression (72) configuré pour exercer sur une portion de la lèvre d'étanchéité (64) une pression dirigée vers la membrane (5, 8) lorsque le corps principal (100) est disposé sur la zone de test (62).

11. Dispositif selon l'une des revendications 1 à 10, dans lequel dans lequel l'équipement d'analyse (56) est configuré pour détecter un gaz traceur.

12. Dispositif selon l'une des revendications 1 à 10, dans lequel l'équipement d'analyse (56) est configuré pour détecter un composant de l'air ambiant.

13. Procédé d'utilisation d'un dispositif de détection de fuite (54) selon l'une des revendication 1 à 12 prise en combinaison avec la revendication 3 sur une zone de test (62) incluant une zone de jonction entre quatre tôles métalliques (31) ondulées ou planes d'une membrane d'étanchéité (5, 8) de cuve, le procédé comportant les étapes de :
- placer la cloche de détection de fuite (55) sur la zone de test (62) de manière à ce que la lèvre d'étanchéité (64) entre en contact avec la membrane d'étanchéité tout autour de la zone de test (62) et que la zone convexe (25) recouvre ladite zone de jonction,
- générer une dépression dans la chambre de détection (61) au moyen de la pompe à vide (57)
- pincer la portion de pincement de la lèvre d'étanchéité (64) entre le corps principal (100) et la membrane d'étanchéité (5, 8) sur au moins une partie de la périphérie de la chambre de détection (61)
- conduire les gaz présents dans la chambre de détection (61) vers l'équipement d'analyse (56), et
- analyser au moyen de l'équipement d'analyse (56) les gaz venant de la chambre de détection (61) pour produire un signal de mesure représentant une quantité d'au moins un gaz présent dans la chambre de détection (61).

## Patentansprüche

1. Leckdetektionsvorrichtung (54) zum Detektieren eines Lecks in einem Testbereich (62) einer Dichtungsmembrane (5, 8) eines dichten und wärmeisolierenden Behälters, wobei die Leckdetektionsvorrichtung (54) umfasst:
- eine Leckdetektionsglocke (55) mit einem zur Anordnung in dem Testbereich (62) bestimmten Hauptkörper (100) und mit einer Dichtung (60), die mit dem Hauptkörper (100) verbunden ist und ausgebildet ist zum Definieren einer Detektionskammer (61) zwischen dem Hauptkörper (100) und dem Testbereich (62), wobei die Dichtung (60) eine umlaufende Dichtlippe (64) aufweist, die für einen Kontakt mit der Dichtungsmembrane konfiguriert ist und eine die Detektionskammer (61) umschließende geschlossene Kontur aufweist,
- eine Unterdruckpumpe (57) die an die Detektionskammer (61) angeschlossen ist, um in der Detektionskammer (61) einen Unterdruck zu erzeugen, und
- eine Analyseeinrichtung (56), die zum Analysieren eines in der Detektionskammer (61) vorhandenen Gases mit der Detektionskammer (61) verbunden ist,
wobei die Dichtlippe (64) derart konfiguriert ist, dass sie zwei Positionen einnehmen kann, nämlich eine erste Position in einem Ausgangszustand, ohne Anwendung eines Unterdrucks in der Detektionskammer (61), und eine zweite Position in einem Betriebszustand, mit Anwendung eines Unterdrucks in der Detektionskammer (61),
**dadurch gekennzeichnet, dass** die Dichtlippe (64) ausschließlich in der zweiten Position, die sich auf den Betriebszustand bezieht, einen Einklemmbereich (53) aufweist, der zwischen dem Hauptkörper (100) und der Dichtmembran (5, 8) über mindestens einen Teil des Umfangs der Detektionskammer (61) eingeklemmt wird, wobei die Dichtlippe (64) eine Flexibilität aufweist, die die Bildung des Einklemmbereichs (53) durch Verformung der Dichtlippe (64) in Richtung der Detektionskammer (61) unter Wirkung des Unterdrucks in der Detektionskammer (61) ermöglicht.

2. Vorrichtung nach Anspruch 1, wobei die Dichtlippe (64) derart konfiguriert ist, dass sie zumindest im Betriebszustand, in dem ein Unterdruck auf die Detektionskammer (61) ausgeübt wird, einen Einklemmbereich (53) aufweist, der über die gesamte Peripherie der Detektionskammer (61) zwischen dem Hauptkörper (100) und der Dichtungsmembrane (5, 8) eingeklemmt wird.

3. Vorrichtung nach einem der Ansprüche 1 bis 2, wobei die Detektionskammer (61) der Leckdetektionsglocke (55) einen beispielsweise kreisförmigen oder polygonförmigen konvexen Bereich (25) aufweist, der dazu bestimmt ist, einen Verbindungsbereich zwischen vier gewellten oder ebenen Metallblechen (31) abzudecken.

4. Vorrichtung nach Anspruch 3, wobei ein Kreis, der geometrisch in den konvexen Bereich (25) eingeschrieben ist, einen Durchmesser größer als 68 mm aufweist.

5. Vorrichtung nach Anspruch 3 oder 4, wobei die Leckdetektionsglocke eine längliche Form entlang einer Längsachse aufweist, wobei die Detektionskammer (61) der Leckdetektionsglocke (55) einen länglichen Bereich (24) aufweist, der dazu bestimmt ist, eine gerade Kante eines Metallblechs abzudecken, und wobei der konvexe Bereich (25) an einem Ende des länglichen Bereichs angeordnet ist.

6. Vorrichtung nach Anspruch 5, wobei der konvexe Bereich ein erster konvexer Bereich (25) ist und die Detektionskammer (61) der Leckdetektionsglocke (55) einen zweiten konvexen Bereich aufweist, der an einem dem ersten konvexen Bereich (25) entlang der Längsachse gegenüberliegenden Ende des länglichen Bereichs angeordnet ist.

7. Vorrichtung nach Anspruch 3 oder 4, wobei die Leckdetektionsglocke entlang einer Längsachse eine längliche Form aufweist, wobei der konvexe Bereich (25) einen zentralen Bereich der Detektionskammer (61) der Leckdetektionsglocke (55) bildet und wobei die Detektionskammer (61) zwei längliche Bereiche (24) aufweist, die sich von dem konvexen Bereich in entgegengesetzter Richtung entlang der Längsachse erstrecken.

8. Vorrichtung nach Anspruch 3, wobei die Detektionskammer (61) eine Kreisform oder eine polygonale konvexe Form aufweist.

9. Vorrichtung nach Anspruch 8, wobei ein in die Form der Detektionskammer geometrisch eingeschriebener Kreis einen Durchmesser größer als 68 mm aufweist.

10. Vorrichtung nach einem der Ansprüche 1 bis 9, wobei die Leckdetektionsglocke (55) mechanische Druckmittel (66) umfasst, die von dem Hauptkörper (100) getragen sind und mindestens ein Druckelement (72) aufweisen, das ausgebildet ist zum Ausüben eines hin zur Membrane (6, 8) gerichteten Drucks auf einen Abschnitt der Dichtlippe (64), wenn der Hauptkörper (100) im Testbereich (62) angeordnet ist.

11. Vorrichtung nach einem der Ansprüche 1 bis 10, wobei die Analyseeinrichtung (56) für die Detektion eines Spürgases konfiguriert ist.

12. Vorrichtung nach einem der Ansprüche 1 bis 10, wobei die Analyseeinrichtung (56) für die Detektion eines Bestandteils der Umgebungsluft konfiguriert ist.

13. Verfahren zur Verwendung einer Leckdetektionsvorrichtung (54) nach einem der Ansprüche 1 bis 12 in Kombination mit Anspruch 3 in einem Testbereich (62), der einen Verbindungsbereich zwischen vier gewellten oder ebenen Metallblechen (31) einer Behälterdichtungsmembrane (5, 8) einschließt, wobei das Verfahren die Schritte umfasst:
- Platzieren der Leckdetektionsglocke (55) in dem Testbereich (62) derart, dass sich die Dichtlippe (64) rund um den Testbereich (62) an die Dichtungsmembrane anlegt und dass der konvexe Bereich (25) den Verbindungsbereich bedeckt,
- Erzeugen eines Unterdrucks in der Detektionskammer (61) mittels einer Unterdruckpumpe (57),
- Einklemmen des Einklemmbereichs der Dichtlippe (64) zwischen dem Hauptkörper (100) und der Dichtungsmembrane (8, 9) über zumindest einen Teil der Peripherie der Detektionskammer (61),
- Leiten der in der Detektionskammer (61) vorhandenen Gase zur Analyseeinrichtung (56) und
- Analysieren der Gase aus der Detektionskammer (61) mittels der Analyseeinrichtung (56), um ein Messsignal zu erzeugen, das eine Menge von mindestens einem in der Detektionskammer (61) vorhandenen Gas repräsentiert.

## Claims

1. A leak detection device (54) for detecting a leak in a test zone (62) of a sealing membrane (5, 8) of a sealed and thermally insulating tank, the leak detection device (54) including:
- a leak detection dome (55) including a main body (100) intended to be disposed in the test zone (62) and a seal (60) connected to the main body (100) and configured to define a detection chamber (61) between the main body (100) and the test zone (62), the seal (60) including a peripheral sealing lip (64) configured to come into contact with the sealing membrane and having a closed contour encircling the detection chamber (61),
- a vacuum pump (57) connected to the detection chamber (61) to generate a reduced pressure in the detection chamber (61), and
- an analysis tool (56) connected to the detection chamber (61) to analyze a gas present in the detection chamber (61),
in which the sealing lip (64) is configured to occupy two positions, namely a first position in an initial state, without application of a vacuum in the detection chamber (61), and a second position in a service state, with application of a vacuum in the detection chamber (61), **characterized in that** the sealing lip (64) comprises only in the second position relative to the service state a pinch portion (53) that is pinched between the main body (100) and the sealing membrane (5, 8) over at least a part of the periphery of the detection chamber (61), the sealing lip (64) having a flexibility allowing the formation of said pinch portion (53) by deformation of the sealing lip (64) towards the detection chamber (61) under the effect of the depression in the detection chamber (61).

2. The device as claimed in claim 1, in which the sealing lip (64) is configured to have, at least in a service state in which a reduced pressure is applied in the detection chamber (61), a pinch portion (53) that is pinched between the main body (100) and the sealing membrane (5, 8) over all of the periphery of the detection chamber (61).

3. The device as claimed in any one of claims 1 to 2, in which the detection chamber (61) of the leak detection dome (55) has a convex, for example circular or polygonal, zone (25) intended to cover a junction zone between four corrugated or plane metal plates (31).

4. The device as claimed in claim 3, in which a circle geometrically inscribed in the convex zone (25) has a diameter greater than 68 mm.

5. The device as claimed in claim 3 or 4, in which the detection dome has an elongate shape along a longitudinal axis, the detection chamber (61) of the leak detection dome (55) including an elongate zone (24) intended to cover a rectilinear edge of a metal plate, the convex zone (25) being disposed at one end of the elongate zone.

6. The device as claimed in claim 5, in which the convex zone is a first convex zone (25) and the detection chamber (61) of the leak detection dome (55) includes a second convex zone disposed at an end of the elongate zone opposite the first convex zone (25) along the longitudinal axis.

7. The device as claimed in claim 3 or 4, in which the detection dome has an elongate shape along a longitudinal axis, the convex zone (25) constituting a central portion of the detection chamber (61) of the leak detection dome (55), the detection chamber (61) including two elongate zones (24) extending from the convex zone away from one another along the longitudinal axis.

8. The device as claimed in claim 3, in which the detection chamber (61) has a convex polygonal or circular shape.

9. The device as claimed in claim 8, in which a circle geometrically inscribed in the shape of the detection chamber has a diameter greater than 68 mm.

10. The device as claimed in any one of claims 1 to 9, in which the leak detection dome (55) includes a mechanical pressure means (66) carried by the main body (100) and including at least one pressure element (72) configured to exert on a portion of the sealing lip (64) a pressure directed toward the membrane (5, 8) when the main body (100) is disposed in the test zone (62).

11. The device as claimed in any one of claims 1 to 10, in which the analysis tool (56) is configured to detect a tracer gas.

12. The device as claimed in any one of claims 1 to 10, in which the analysis tool (56) is configured to detect a component of the surrounding air.

13. A method of using a leak detection device (54) as claimed in any one of claims 1 to 12 in combination with claim 3 in a test zone (62) including a junction zone between four corrugated or plane metal plates (31) of a tank sealing membrane (5, 8), the method including the steps of:
- placing the leak detection dome (55) in the test zone (62) in such a manner that the sealing lip (64) comes into contact with the sealing membrane all around the test zone (62) and the convex zone (25) covers said junction zone,
- generating a reduced pressure in the detection chamber (61) by means of the vacuum pump (57),
- pinching the pinch portion of the sealing lip (64) between the main body (100) and the sealing membrane (5, 8) over at least a part of the periphery of the detection chamber (61),
- conveying the gases present in the detection chamber (61) toward the analysis tool (56), and
- analyzing by means of the analysis tool (56) the gases coming from the detection chamber (61) to produce a measurement signal representing a quantity of at least one gas present in the detection chamber (61).
